# EUROPEAN PATENT APPLICATION

(11) **EP 4 808 260 A1**
(43) Date of publication of application: **16.09.2026**
(21) Application number: 24910236.9
(22) Date of filing: 24.10.2024
(51) Int. Cl.: H04W 76/10, H04L 65/40

(54) **COMMUNICATION METHOD, COMMUNICATION APPARATUS, AND COMMUNICATION SYSTEM**

(30) Priority: 25.12.2023 CN 202311806840
(71) Applicant: Huawei Technologies Co., Ltd., Shenzhen, Guangdong 518129 (CN)
(72) Inventor: ZHOU, Qingyang, Shenzhen, Guangdong 518129 (CN); ZHU, Haoren, Shenzhen, Guangdong 518129 (CN); WANG, Yuan, Shenzhen, Guangdong 518129 (CN); LI, Yan, Shenzhen, Guangdong 518129 (CN)
(74) Representative: Huawei European IPR
(86) International application number: PCT/CN2024/127156
(87) International publication number: WO 2025/139295

(57) **Abstract**

This application provides a communication method, a communication apparatus, and a communication system. The method includes: A first device receives RDMA connection establishment information of a second device from the second device, and sends RDMA connection establishment information of the first device to the second device; and the first device establishes an RDMA connection between the first device and the second device based on the RDMA connection establishment information of the first device and the RDMA connection establishment information of the second device. In this solution, an RDMA technology is used in a 5G network or a future communication network for data transmission, so that CPU overheads of data transmission can be reduced and requirements of services for high throughput and low latency characteristics can be satisfied.

## Description

### CROSS-REFERENCE TO RELATED APPLICATIONS

This application claims priority to Chinese Patent Application No. 202311806840.2, filed with the China National Intellectual Property Administration on December 25, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

In current 5th generation (5th generation, 5G) user plane data transmission, data transmission between different nodes requires extensive involvement of a central processing unit (central processing unit, CPU) in a data transmission process. However, this data transmission scheme often suffers from a computer system bottleneck caused by a speed mismatch between a CPU and a memory, which is commonly referred to as a "memory wall." This is because a CPU speed becomes faster, while a memory speed has not been improving at the same pace. Data transmission between the CPU and the memory takes time. When the CPU needs to read or write a large amount of data, it may experience waiting cycles for memory access, thereby preventing the CPU from fully utilizing its computing capacity and affecting overall performance of a computer system. This data transmission approach, which requires extensive CPU involvement, is also referred to as a message passing through kernel (message passing through kernel) approach.

This data transmission approach incurs high overheads in data movement and data copying due to the need to pass through the kernel. In addition, such a data transmission approach may be unable to satisfy requirements of some specific services for high throughput and low latency characteristics.

How to reduce CPU overheads of data transmission in a 5G network or a future network and meet requirements of services for high throughput and low latency characteristics needs to be resolved.

### SUMMARY

This application provides a communication method, a communication apparatus, and a communication system, to reduce CPU overheads of data transmission in a 5G network or a future network and meet requirements of services for high throughput and low latency characteristics.

According to a first aspect, an embodiment of this application provides a communication method. The method may be performed by a first device or a module (for example, a chip) of the first device. The method includes: receiving RDMA connection establishment information of a second device from the second device, and sending RDMA connection establishment information of the first device to the second device; and establishing an RDMA connection between the first device and the second device based on the RDMA connection establishment information of the first device and the RDMA connection establishment information of the second device.

In the foregoing solution, an RDMA technology is used in a 5G network or a future communication network for data transmission, so that CPU overheads of data transmission can be reduced and requirements of services for high throughput and low latency characteristics can be satisfied.

In a possible implementation method, receiving the RDMA connection establishment information of the second device from the second device, and sending the RDMA connection establishment information of the first device to the second device includes: receiving indication information, where the indication information indicates to use an RDMA scheme to perform data transmission; sending an RDMA connection establishment request to the second device based on the indication information, where the RDMA connection establishment request includes the RDMA connection establishment information of the first device; and receiving an RDMA connection establishment response from the second device, where the RDMA connection establishment response includes the RDMA connection establishment information of the second device.

In the foregoing solution, when receiving the indication information indicating to use the RDMA scheme to perform data transmission, the first device sends the RDMA connection establishment request to the second device based on the indication information, to attempt to establish the RDMA connection between the first device and the second device, so that the RDMA connection can be established based on a requirement, thereby helping reduce overheads.

In a possible implementation method, receiving the RDMA connection establishment information of the second device from the second device, and sending the RDMA connection establishment information of the first device to the second device includes: receiving an RDMA connection establishment request from the second device, where the RDMA connection establishment request includes the RDMA connection establishment information of the second device; and sending an RDMA connection establishment response to the second device, where the RDMA connection establishment response includes the RDMA connection establishment information of the first device.

In a possible implementation method, the first device is an access network device, and the second device is a user plane network element; and receiving the RDMA connection establishment information of the second device from the second device includes: receiving the RDMA connection establishment information of the second device through an interface between the first device and the second device; or receiving the RDMA connection establishment information of the second device through an interface between the first device and a mobility management network element, where the RDMA connection establishment information of the second device is sent by the second device to the mobility management network element via a session management network element.

In the foregoing solution, the RDMA connection between the access network device and the user plane network element is established, so that CPU overheads of data transmission between the access network device and the user plane network element can be reduced.

In a possible implementation method, the user plane network element is an uplink classifier user plane network element or a branching point user plane network element.

In a possible implementation method, the first device is an access network device, and the second device is a mobility management network element; and receiving the RDMA connection establishment information of the second device from the second device includes: receiving the RDMA connection establishment information of the second device through an interface between the first device and the second device.

In the foregoing solution, the RDMA connection between the access network device and the mobility management network element is established, so that CPU overheads of data transmission between the access network device and the mobility management network element can be reduced.

In a possible implementation method, the first device is a user plane network element, and the second device is an access network device; and sending the RDMA connection establishment information of the first device to the second device includes: sending the RDMA connection establishment information of the first device through an interface between the first device and the second device; or sending the RDMA connection establishment information of the first device through an interface between the first device and a session management network element, where the RDMA connection establishment information of the first device is sent by the session management network element to the second device via a mobility management network element.

In the foregoing solution, the RDMA connection between the access network device and the user plane network element is established, so that CPU overheads of data transmission between the access network device and the user plane network element can be reduced.

In a possible implementation method, the user plane network element is an uplink classifier user plane network element or a branching point user plane network element, and the method further includes: sending the RDMA connection establishment information of the first device to an anchor user plane network element, and receiving RDMA connection establishment information of the anchor user plane network element from the anchor user plane network element; and establishing an RDMA connection between the anchor user plane network element and the first device based on the RDMA connection establishment information of the first device and the RDMA connection establishment information of the anchor user plane network element.

In a possible implementation method, the first device is a mobility management network element, and the second device is an access network device or a session management network element; and sending the RDMA connection establishment information of the first device to the second device includes: sending the RDMA connection establishment information of the first device through an interface between the first device and the second device.

In the foregoing solution, the RDMA connection between the mobility management network element and the access network device or the session management network element is established, so that CPU overheads of data transmission between the mobility management network element and the access network device or the session management network element can be reduced.

In a possible implementation method, receiving the RDMA connection establishment information of the second device from the second device, and sending the RDMA connection establishment information of the first device to the second device includes: in a session establishment or modification procedure, receiving the RDMA connection establishment information of the second device from the second device and sending the RDMA connection establishment information of the first device to the second device.

In a possible implementation method, the method further includes: receiving RDMA disconnection information of the second device from the second device, and sending RDMA disconnection information of the first device to the second device; and disconnecting the RDMA connection between the first device and the second device based on the RDMA disconnection information of the first device and the RDMA disconnection information of the second device.

In the foregoing solution, when the RDMA connection is not required, the RDMA connection is released, so that resources can be saved.

In a possible implementation method, receiving the RDMA disconnection information of the second device from the second device, and sending the RDMA disconnection information of the first device to the second device includes: receiving an RDMA disconnection request from the second device, where the RDMA disconnection request includes the RDMA disconnection information of the second device; and sending an RDMA disconnection response to the second device, where the RDMA disconnection response includes the RDMA disconnection information of the first device.

In a possible implementation method, the method further includes: determining, based on the RDMA disconnection information of the first device, whether disconnection of the RDMA connection between the first device and the second device is allowed; and sending the RDMA disconnection response to the second device includes: sending the RDMA disconnection response to the second device when disconnection of the RDMA connection between the first device and the second device is allowed.

In a possible implementation method, receiving the RDMA disconnection information of the second device from the second device, and sending the RDMA disconnection information of the first device to the second device includes: sending an RDMA disconnection request to the second device, where the RDMA disconnection request includes the RDMA disconnection information of the first device; and receiving an RDMA disconnection response from the second device, where the RDMA disconnection response includes the RDMA disconnection information of the second device.

According to a second aspect, an embodiment of this application provides a communication method. The method may be performed by a third device or a module (for example, a chip) of the third device. The method includes: determining to establish an RDMA connection; and sending indication information to a fourth device, where the indication information indicates to use an RDMA scheme to perform data transmission.

In the foregoing solution, when determining to establish the RDMA connection, the third device indicates the fourth device to establish the RDMA connection. Therefore, an RDMA technology is used in a 5G network or a future communication network for data transmission, so that CPU overheads of data transmission can be reduced and requirements of services for high throughput and low latency characteristics can be satisfied.

In a possible implementation method, the third device is a session management network element, and the fourth device is an access network device, a user plane network element, or a mobility management network element.

In a possible implementation method, the third device is a mobility management network element, and the fourth device is an access network device, a user plane network element, or a session management network element.

In a possible implementation method, determining to establish the RDMA connection includes: receiving a request message from a terminal device, where the request message is for requesting to establish the RDMA connection; and determining, based on the request message, to establish the RDMA connection.

In a possible implementation method, determining to establish the RDMA connection includes: receiving a QoS request, where the QoS request includes a QoS level, and a data transmission mode corresponding to the QoS level is RDMA transmission; and determining, based on the QoS request, to establish the RDMA connection.

In the foregoing solution, an RDMA connection may be established based on a QoS requirement of a service, so that requirements of services for high throughput and low latency characteristics can be satisfied.

In a possible implementation method, determining to establish the RDMA connection includes: determining, based on local configuration information of the third device, to establish the RDMA connection.

According to a third aspect, an embodiment of this application provides a communication apparatus. The apparatus may be a first device or a module (for example, a chip) of the first device. The apparatus has a function of implementing any implementation method of the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a third device or a module (for example, a chip) of the third device. The apparatus has a function of implementing any implementation method of the second aspect. The function may be implemented by hardware, or may be implemented by hardware executing corresponding software. The hardware or the software includes one or more modules corresponding to the function.

According to a fifth aspect, an embodiment of this application provides a communication apparatus, including a unit or a means (means) configured to perform steps of any one of the implementation methods of the first aspect and the second aspect.

According to a sixth aspect, an embodiment of this application provides a communication apparatus, including a processor and an interface circuit. The processor is configured to communicate with another apparatus through the interface circuit, and perform any one of the implementation methods of the first aspect and the second aspect. There are one or more processors.

According to a seventh aspect, an embodiment of this application provides a communication apparatus, including a processor. The processor is configured to invoke a program, to perform any one of the implementation methods of the first aspect and the second aspect. In addition, there may be one or more processors.

Optionally, the communication apparatus may further include a memory. The memory is coupled to the processor. The memory may be located inside the apparatus, or may be located outside the apparatus.

According to an eighth aspect, an embodiment of this application provides a communication apparatus, including a processor. When the apparatus runs, the processor executes computer instructions, to enable the apparatus to perform any one of the implementation methods of the first aspect and the second aspect.

Optionally, the communication apparatus may further include a memory, and the memory is configured to store the computer instructions.

According to a ninth aspect, an embodiment of this application further provides a computer program product. The computer program product includes a computer program or instructions. When the computer program or the instructions are run by a communication apparatus, any one of the implementation methods of the first aspect and the second aspect is performed.

According to a tenth aspect, an embodiment of this application further provides a computer-readable storage medium. The computer-readable storage medium stores instructions. When the instructions are run on a communication apparatus, any one of the implementation methods of the first aspect and the second aspect is performed.

According to an eleventh aspect, an embodiment of this application further provides a chip system, including a processor, configured to perform any one of the implementation methods of the first aspect and the second aspect.

According to a twelfth aspect, an embodiment of this application further provides a communication system, including a first device and a second device. The first device is configured to: receive RDMA connection establishment information of the second device from the second device, send RDMA connection establishment information of the first device to the second device, and establish an RDMA connection between the first device and the second device based on the RDMA connection establishment information of the first device and the RDMA connection establishment information of the second device. The second device is configured to: receive the RDMA connection establishment information of the first device from the first device, and send the RDMA connection establishment information of the second device to the first device; and establish the RDMA connection between the first device and the second device based on the RDMA connection establishment information of the first device and the RDMA connection establishment information of the second device.

In a possible implementation method, the communication system further includes a third device in any implementation method of the second aspect.

### BRIEF DESCRIPTION OF DRAWINGS

FIG. 1(a) is a diagram of a 5G network architecture based on a service-based architecture;
FIG. 1(b) is a diagram of a 5G network architecture based on point-to-point interfaces;
FIG. 2 is a diagram of memory access when there is no DMA;
FIG. 3 is a diagram of memory access when there is DMA;
FIG. 4 is a diagram of memory access between different nodes in a conventional network;
FIG. 5 is a diagram of memory access between different nodes when there is RDMA;
FIG. 6 to FIG. 15 are schematic flowcharts of communication methods according to embodiments of this application; and
FIG. 16 and FIG. 17 are diagrams of communication apparatuses according to embodiments of this application.

### DESCRIPTION OF EMBODIMENTS

To cope with a challenge of a wireless broadband technology and maintain a leading position of a 3rd generation partnership project (3rd generation partnership project, 3GPP) network, the 3GPP standard group has formulated a next generation mobile communication network system (next generation system) architecture, which is referred to as a 5th generation (5th generation, 5G) network architecture. The architecture not only supports access to a 5G core network (core network, CN) by using a radio access technology (for example, a long term evolution (long term evolution, LTE) access technology and a 5G radio access network (radio access network, RAN) access technology) defined by the 3GPP standard group, but also supports access to a core network by using a non-3GPP (non-3GPP) access technology through a non-3GPP interworking function (non-3GPP interworking function, N3IWF) or a next generation access gateway (next generation packet data gateway, ngPDG).

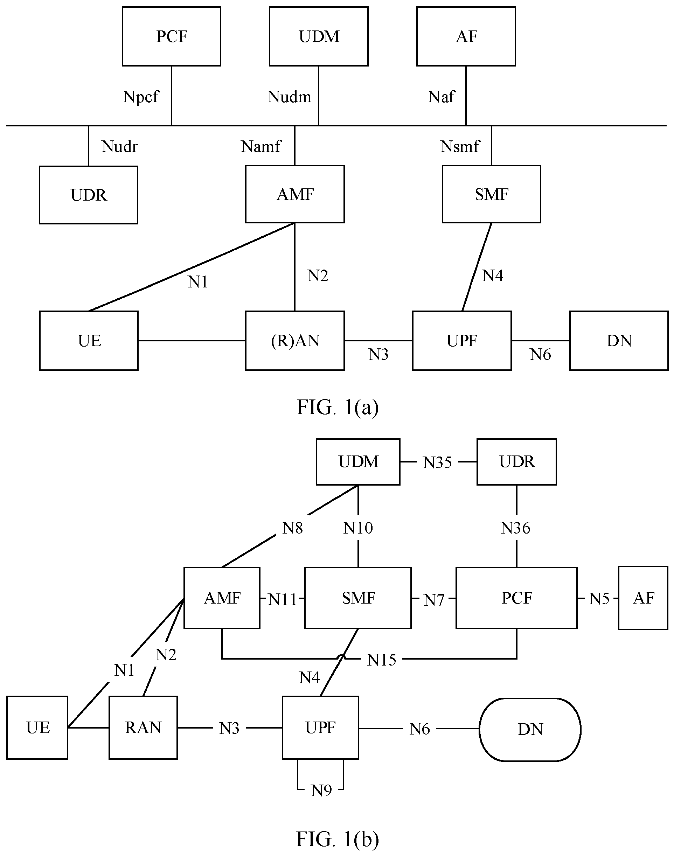

FIG. 1(a) is a diagram of a 5G network architecture based on a service-based architecture. The 5G network architecture shown in FIG. 1(a) may include an access network device and a core network device. A terminal device accesses a data network (data network, DN) through the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and a binding support function (binding support function, BSF) network element (not shown in the figure).

The terminal device may be a user equipment (user equipment, UE), a mobile station, a mobile terminal device, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart home, smart office, smart wear, smart transportation, and smart city. The terminal device may be a mobile phone, a tablet computer, a computer having a wireless transceiver function, a wearable device, a vehicle, an urban air transportation vehicle (like an uncrewed aerial vehicle or a helicopter), a ship, a robot, a mechanical arm, a smart home device, or the like. For ease of description, in this application, an example in which a UE is used as the terminal device is used for description, and a UE that appears at any location subsequently may be replaced with a terminal device.

The access network device may be a radio access network device or a wired access network device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, and a base station or a module or unit that completes some functions of the base station in a future mobile communication system, for example, a central unit (central unit, CU) or a distributed unit (distributed unit, DU). The untrusted non-3GPP access network device includes but is not limited to: an untrusted non-3GPP access gateway or N3IWF device, an untrusted wireless local area network (wireless local area network, WLAN) access point (access point, AP), a switch, or a router. The trusted non-3GPP access network device includes but is not limited to: a trusted non-3GPP access gateway, a trusted WLAN AP, a switch, or a router. The wireline access network device includes but is not limited to: a wireline access gateway (wireline access gateway), a fixed telephone network device, a switch, or a router. For ease of description, in this application, an example in which a base station is used as the access network device is used for description, and a base station that appears at any location subsequently may be replaced with an access network device.

The base station and the UE may be at fixed positions, or may be movable. The base station and the UE may be deployed on land, including an indoor or outdoor scenario, and a handheld or vehicle-mounted scenario; or may be deployed on water; or may be deployed on an airplane, a balloon, or an artificial satellite in the air. Application scenarios of the base station and the UE are not limited in embodiments of this application.

The AMF network element includes functions such as mobility management or access authentication/authorization. In addition, the AMF network element is further responsible for transferring a user policy between the UE and the PCF.

The SMF network element includes functions such as session management, execution of a control policy delivered by the PCF network element, UPF network element selection, or allocation of an internet protocol (internet protocol, IP) address of the UE.

The UPF network element includes functions such as user plane data forwarding, session/flow-level charging statistics, or bandwidth limitation.

The UDM network element includes functions such as subscription data management or user access authorization.

The UDR includes functions for accessing subscription data, policy data, application data, and other types of data.

The NEF network element is configured to support exposure of capabilities and events.

The AF network element transfers a requirement of an application side for a network side, for example, a QoS requirement or user status event subscription. The AF may be a third-party functional entity, or may be an operator-deployed application service, for example, an IP multimedia subsystem (IP Multimedia Subsystem, IMS) voice call business. The AF network element includes an AF network element in a core network (that is, an AF network element of an operator) and a third-party AF network element (for example, an application server of an enterprise).

The PCF network element includes policy control functions such as being responsible for charging at a session or business flow level, QoS bandwidth assurance and mobility management, and UE policy decision. The PCF network element includes an access and mobility management policy control function (access and mobility management policy control function, AM PCF) network element and a session management policy control function (session management PCF, SM PCF) network element. The AM PCF network element is configured to formulate an AM policy and a user policy for a UE. The AM PCF network element may also be referred to as a policy control function network element that provides a service for a UE (PCF for a UE). The SM PCF network element is configured to formulate a session management policy (session management policy, SM policy) for a session, and the SM PCF network element may also be referred to as a policy control function network element that provides a service for a protocol data unit (protocol data unit, PDU) session (PCF for a PDU session).

The NRF network element may be configured to provide a network element discovery function, and provide, based on a request of another network element, network element information corresponding to a network element type. The NRF network element further provides a network element management service, for example, network element registration, update, and deregistration, or network element status subscription and push.

The BSF network element provides functions such as registration/deregistration/update of a BSF service, NRF connection detection, session binding information creation, UE information obtaining, and session binding information query for duplicate IP addresses.

The AUSF network element is responsible for authenticating a user, to determine whether the user or a device is allowed to access a network.

The DN is a network located outside an operator network. A plurality of DNs can access the operator network, and a plurality of services can be deployed on the DN, to provide services such as data and/or voice for a UE. For example, the DN is a private network of an intelligent factory, a sensor mounted in a workshop of the intelligent factory may be the UE, a control server of the sensor is deployed in the DN, and the control server may provide a service for the sensor. The sensor may communicate with the control server to obtain an instruction of the control server, transmit collected sensor data to the control server according to the instruction, and the like. For another example, the DN is an internal office network of a company, a mobile phone or a computer of an employee in the company may be the UE, and the mobile phone or the computer of the employee can access information, a data resource, or the like on the internal office network of the company.

Npcf, Nudr, Nudm, Naf, Namf, and Nsmf in FIG. 1(a) are service-based interfaces provided by the foregoing PCF, UDR, UDM, AF, AMF, and SMF, respectively, and are configured to invoke corresponding service-based operations. N1, N2, N3, N4, and N6 are interface sequence numbers. Meanings of these interface sequence numbers are as follows:
(1) N1 is an interface between the AMF network element and the UE, and may be configured to transfer non-access stratum (non-access stratum, NAS) signaling (for example, including a QoS rule from the AMF network element) to the UE, and the like.
(2) N2 is an interface between the AMF network element and the base station, and may be configured to transfer radio bearer control information from a core network side to the base station, and the like.
(3) N3 is an interface between the base station and the UPF network element, and is mainly configured to transfer uplink and downlink user plane data between the base station and the UPF network element.
(4) N4 is an interface between the SMF network element and the UPF network element, and may be configured to transfer information between a control plane and a user plane, including delivery of a forwarding rule, a QoS rule, a traffic statistics rule, and the like from the control plane to the user plane, and reporting of user plane information.
(5) N6 is an interface between the UPF network element and the DN, and is configured to transfer uplink and downlink user data flows between the UPF network element and the DN.

FIG. 1(b) is a diagram of a 5G network architecture based on point-to-point interfaces. For descriptions of functions of network elements in the architecture, refer to descriptions of functions of corresponding network elements in FIG. 1(a). Details are not described again. A main difference between FIG. 1(b) and FIG. 1(a) lies in the following: interfaces between control plane network elements in FIG. 1(a) are service-based interfaces, and interfaces between control plane network elements in FIG. 1(b) are point-to-point interfaces.

In the architecture shown in FIG. 1(b), names and functions of interfaces between network elements are as follows.
(1) For meanings of N1, N2, N3, N4, and N6 interfaces, refer to the foregoing descriptions.
(2) N5 is an interface between the AF network element and the PCF network element, and may be configured to deliver an application service request and report a network event.
(3) N7 is an interface between the PCF network element and an SMF network element, and may be configured to deliver a PDU session granularity control policy and a service data flow granularity control policy.
(4) N8 is an interface between the AMF network element and the UDM network element, and may be used by the AMF network element to obtain subscription data and authentication data related to access and mobility management from the UDM network element, used by the AMF to register information related to UE mobility management with the UDM, and the like.
(5) N9 is a user plane interface between UPF network elements, and is configured to transfer uplink and downlink user data flows between the UPF network elements.
(6) N10 is an interface between the SMF network element and the UDM network element, and may be used by the SMF network element to obtain subscription data related to session management from the UDM network element, used by the SMF network element to register information related to a UE session with the UDM, and the like.
(7) N11 is an interface between the SMF network element and the AMF network element, and may be configured to transfer PDU session tunnel information between the base station and the UPF network element, transfer a control message sent to the UE, transfer radio resource control information sent to the base station, and the like.
(8) N15 is an interface between the PCF network element and the AMF network element, and may be configured to deliver a UE policy and an access control-related policy.
(9) N35 is an interface between the UDM network element and the UDR network element, and may be used by the UDM network element to obtain user subscription data information from the UDR network element.
(10) N36 is an interface between the PCF network element and the UDR network element, and may be used by the PCF network element to obtain policy-related subscription data and application data-related information from the UDR network element.

It may be understood that the foregoing network elements or functions may be network elements in a hardware device, or may be software functions running on dedicated hardware or virtualized functions instantiated on a platform (for example, a cloud platform). Optionally, the network element or function may be implemented by one device, may be jointly implemented by a plurality of devices, or may be a functional module in one device. This is not specifically limited in embodiments of this application.

The user plane network element, the mobility management network element, and the session management network element in this application may be respectively the UPF network element, the AMF network element, and the SMF network element in FIG. 1(a) or FIG. 1(b), or may be network elements that have functions of the UPF network element, the AMF network element, and the SMF network element in a future communication network such as a 6G network. This is not limited in this application. In embodiments of this application, an example in which the UPF network element, the AMF network element, and the SMF network element are the user plane network element, the mobility management network element, and the session management network element, respectively is used for description, and the UPF network element, the AMF network element, and the SMF network element are referred to as a UPF, an AMF, and an SMF, respectively for short.

For ease of understanding content of this application, the following first describes background technologies in this application.

### 1. Direct memory access (direct memory access, DMA)

DMA refers to a process in which an external device may directly read and write a memory without participation of a central processing unit (central processing unit, CPU).

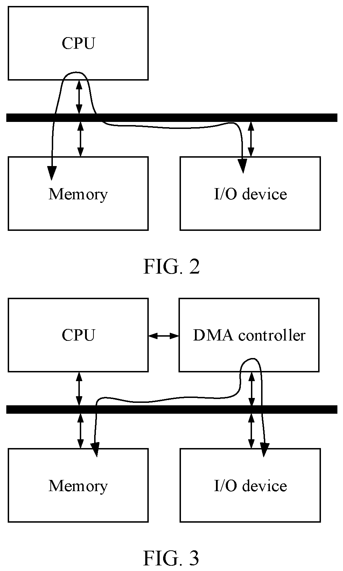

FIG. 2 is a diagram of memory access when there is no DMA. It is assumed that an input/output (input/output, I/O) device is a common network adapter. To obtain, from a memory, data that needs to be sent, assemble the data into a data packet, and send the data packet to a physical link, the network adapter needs to notify a CPU of a data request of the network adapter through a bus. Then, the CPU copies, based on the data request, corresponding data in a memory buffer to an internal register of the CPU, and then copies the data to storage space of the I/O device. If there is a large amount of data, the CPU is busy migrating data for a long time and cannot be used for other tasks. The primary role of the CPU is computation rather than data copying. Therefore, such data copying work wastes a computational capacity of the CPU. A DMA mechanism is designed to offload the CPU and allow it to focus on more meaningful tasks.

FIG. 3 is a diagram of memory access when there is DMA. As can be seen, a DMA controller is attached to a bus, which is specifically designed for reading from and writing to a memory. When a network adapter intends to copy data from the memory, except for some necessary control commands, the entire data copying process is completed by the DMA controller. This process is the same as the CPU copying shown in FIG. 2, except that in the DMA approach, data in the memory is first copied to a register inside the DMA controller via the bus, and then copied to storage space of an I/O device. Except for keeping track of starting and ending of this process, a CPU can spend its time doing other things. The DMA controller may be usually disposed inside the I/O device. In other words, the I/O device includes both a module responsible for data receiving and sending and a DMA module.

### 2. Remote direct memory access (remote direct memory access, RDMA)

RDMA can implement direct access of a local node to a memory of a remote node. The direct means that a remote memory can be read and written by bypassing a complex transmission control protocol (transmission control protocol, TCP) /IP network protocol stack of a conventional Ethernet, just like accessing a local memory. The peer end is unaware of this process, and most operations of the read and write process are completed by hardware instead of software.

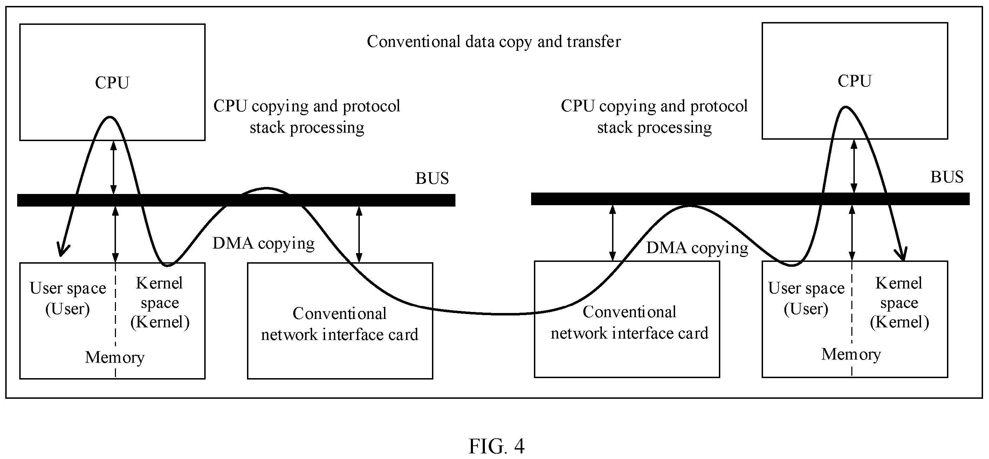

FIG. 4 is a diagram of memory access between different nodes in a conventional network. In a conventional network, "node A sends a message to node B" is actually "transferring a segment of data in a memory of node A to a memory of node B through a network link". This process requires command and control of a CPU, including network adapter control, interrupt processing, and packet encapsulation and parsing, regardless of a transmitter or a receiver. Data, in user space of a memory, of a node on the left in FIG. 4 needs to be copied to a buffer in kernel space by a CPU, and then can be accessed by a network adapter. During this process, the data traverses a software-implemented TCP/IP protocol stack, where headers and checksums for various layers, such as TCP and IP headers, are added. The network adapter copies the data in the kernel to an internal buffer of the network adapter through DMA, processes the data, and sends the processed data to a peer end through a physical link. After receiving the data, a reverse process takes place at the peer end: the data is copied from internal storage space of a network adapter to a buffer in kernel space of a memory through DMA, and then a CPU parses the data through a TCP/IP protocol stack, extracts the data, and copies the data to user space. It can be learned that even with the DMA technology, the foregoing process still has a strong dependency on the CPU.

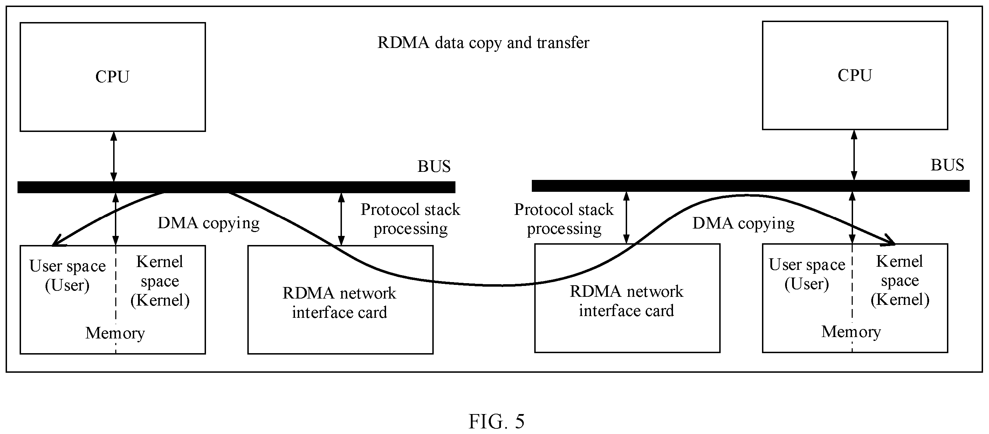

FIG. 5 is a diagram of memory access between different nodes when there is RDMA. Similarly, in a case of copying a segment of data in a local memory to a peer memory, when an RDMA technology is used, CPUs of both parties almost do not need to participate in a data transmission process (only participate in a control plane). A local RDMA network adapter directly performs DMA copying of data from a user space of a memory to an internal storage space of the RDMA network adapter, after which the hardware assembles packets of various layers and transmits the packets to a peer RDMA network adapter through a physical link. After receiving the data, the peer RDMA network adapter strips packet headers and checksums of respective layers, and directly copies the data to a user space of a memory through DMA.

The RDMA technology has the following advantages:
(1) Zero-copy: There is no need to copy data back and forth between user space and kernel space.
(2) Kernel bypass: I/O data flows can bypass the kernel. That is, data can be prepared at a user layer and hardware can be notified to prepare for sending and receiving, avoiding overheads of system calls and context switches.
(3) CPU offloading: A memory can be read from or written to without involving a CPU of a remote node (provided that a "key (key)" for accessing a specific segment of memory on a remote side is held). In effect, packet encapsulation and parsing are offloaded to the hardware. In contrast, conventional Ethernet communication necessitates CPU participation from both sides for parsing packets at each layer. When data volumes are substantial and interactions are frequent, this constitutes a considerable burden on the CPU, occupying CPU compute resources that could otherwise be allocated to more meaningful tasks.

Therefore, the RDMA technology can achieve high throughput and low latency in network transmission while reducing CPU load.

The RDMA protocol stack has a plurality of versions, which are IB->RoCEv1->iWARP->RoCEv2 in chronological order. IB is short for Infiniband, RoCE is short for RDMA over converged ethernet (RDMA over converged ethernet), and iWARP is short for internet wide area RDMA protocol (internet wide area RDMA protocol). RoCE includes a version 1 (v1) and a version 2 (v2). It should be noted that herein, for example, the RDMA protocol includes the IB protocol, the RoCEv1 protocol, the iWARP protocol, and the RoCEv2 protocol. In actual application, another type of protocol may be further included. This is not limited in this application.

RDMA uses a work queue to queue and execute a series of service requests. The work queue is referred to as a queue pair (queue pair, QP) in RDMA. In the queue pair, one queue is used to send an operation, and the other queue is used to receive an operation. Usually, a sending work queue stores instructions that cause data to be transferred between a memory of a consumer and a memory of another consumer, while a receiving work queue stores instructions about where to place data received from another consumer. The another consumer is referred to as a remote consumer, even if they may be on a same node. RDMA supports both connection-oriented and datagram-oriented services. For connection-oriented services, each QP is associated with only one remote user. In this case, a QP context is configured as an identifier of a queue pair of the remote consumer. The remote consumer is identified by a port and a queue pair number (queue pair number, QPN). The port is identified by a local identifier (local ID, LID), or by a local identifier and a global identifier (global ID, GID).

RDMA includes but is not limited to the following four connection types:
(1) Reliable connection (reliable connection, RC): provides reliable message-oriented transmission. QPs at both ends of communication are bound one by one. This is the most common RDMA connection type.
(2) Unreliable connection (unreliable connection, UC): provides unreliable message-oriented transmission. QPs at both ends of communication are bound one by one.
(3) Unreliable datagram (unreliable datagram, UD): provides unreliable message-oriented transmission. QPs at both ends of communication are not bound one by one. This transmission type is similar to that in the user datagram protocol (user datagram protocol, UDP).
(4) Reliable datagram (reliable datagram, RD): Currently, most network adapter vendors do not support the RD.

### 3. User plane data transmission mode

The user plane is an important part of a 5G network, and is responsible for transmitting user data. The user plane involves data transmission from a UE to a network and data transmission from the network to the UE.

User plane interfaces are mainly an N3 interface and an N9 interface. The N3 interface is an interface between a base station and a UPF, and uses the general packet radio service (general packet radio service, GPRS) tunneling protocol user plane (GPRS tunneling protocol user plane, GTP-U) protocol for tunnel transmission of user data. The N3 interface is mainly for transmitting uplink and downlink user plane data between the base station and the UPF. The N9 interface is an interface between different UPFs. In mobility scenarios, an intermediate UPF (intermediate UPF, I-UPF) may be inserted between a UE and a PDU session anchor (PDU session anchor, PSA) UPF for traffic forwarding. The GTP-U protocol is used for user-plane packet transmission between the two UPFs.

The GTP-U protocol is for transmitting user plane data in a mobile communications network. Efficient data transmission is performed between different network nodes through tunnel establishment and protocol encapsulation. A specific transmission mode used varies according to different network versions and network nodes.

In current 5G user plane data transmission, a data transmission mode between different nodes (for example, a base station and a UPF) is similar to the data transmission mode shown in FIG. 4, and requires extensive CPU involvement in a data transmission process. However, this data transmission scheme often suffers from a computer system bottleneck caused by a speed mismatch between a CPU and a memory, which is commonly referred to as a "memory wall." This is because a CPU speed becomes faster, while a memory speed has not been improving at the same pace. Data transmission between the CPU and the memory takes time. When the CPU needs to read or write a large amount of data, it may experience waiting cycles for memory access, thereby preventing the CPU from fully utilizing its computing capacity and affecting overall performance of a computer system. This data transmission approach, which requires extensive CPU involvement, is also referred to as a message passing through kernel (message passing through kernel) approach. This data transmission approach incurs high overheads in data movement and data copying due to the need to pass through the kernel. In addition, such a data transmission approach may be unable to satisfy requirements of some specific services for high throughput and low latency characteristics.

This application provides a corresponding solution to reduce CPU overheads of data transmission in a 5G network or a future network and meet requirements of services for high throughput and low latency characteristics.

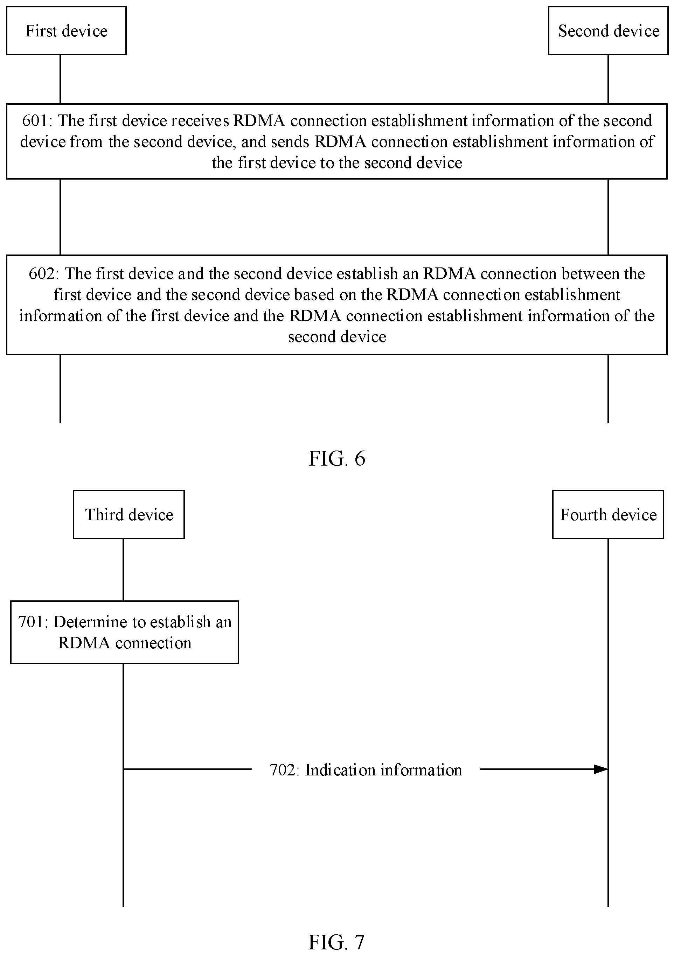

FIG. 6 is a schematic flowchart of a communication method according to an embodiment of this application. The method is performed by a first device or a module (for example, a chip) of the first device, and a second device or a module (for example, a chip) of the second device. The following uses an example in which the first device and the second device perform the method for description.

The method includes the following steps.

Step 601: The first device receives RDMA connection establishment information of the second device from the second device, and sends RDMA connection establishment information of the first device to the second device.

The RDMA connection establishment information of the first device includes a port identifier and a queue pair identifier of the first device. Optionally, the RDMA connection establishment information of the first device further includes one or more of access permission information, a source host address, a destination host address, a connection type, a service level, a protocol type, an operation mode, or a virtual memory address. For example, the port identifier of the first device includes a local identifier (local ID, LID), or includes a local identifier and a global identifier (global ID, GID). For example, the queue pair identifier may be a queue pair number (queue pair number, QPN). The port identifier and the queue pair identifier of the first device may jointly indicate a QP address. Specifically, a port is indicated by using the port identifier, and a QP in the port is indicated by using the queue pair identifier. For example, the access permission information may be a key (key), and indicates permission for accessing a memory of the first device. The source host address is an IP address of the first device. The destination host address is an IP address of the second device. The connection type is a reliable connection, an unreliable connection, a reliable datagram, an unreliable datagram, or another connection type. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

The RDMA connection establishment information of the second device includes a port identifier and a queue pair identifier of the second device. Optionally, the RDMA connection establishment information of the second device further includes one or more of access permission information, a source host address, a destination host address, a connection type, a service level, a protocol type, an operation mode, or a virtual memory address. For example, the port identifier of the second device includes a local identifier, or includes a local identifier and a global identifier. For example, the queue pair identifier may be a QPN. The port identifier and the queue pair identifier of the second device may jointly indicate a QP address. Specifically, a port is indicated by using the port identifier, and a QP in the port is indicated by using the queue pair identifier. For example, the access permission information may be a key (key), and indicates permission for accessing a memory of the second device. The source host address is an IP address of the second device. The destination host address is an IP address of the first device. The connection type is a reliable connection, an unreliable connection, a reliable datagram, an unreliable datagram, or another connection type. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

In an implementation method, step 601 is specifically: The first device receives indication information, for example, receives the indication information from an AMF or an SMF, where the indication information indicates to use an RDMA scheme to perform data transmission. The first device sends an RDMA connection establishment request to the second device based on the indication information, where the RDMA connection establishment request includes the RDMA connection establishment information of the first device. After receiving the RDMA connection establishment request, the second device sends an RDMA connection establishment response to the first device, where the RDMA connection establishment response includes the RDMA connection establishment information of the second device.

In another implementation method, step 601 is specifically: The second device receives indication information, for example, receives the indication information from an AMF or an SMF, where the indication information indicates to use an RDMA scheme to perform data transmission. The second device sends an RDMA connection establishment request to the first device based on the indication information, where the RDMA connection establishment request includes the RDMA connection establishment information of the second device. After receiving the RDMA connection establishment request, the first device sends an RDMA connection establishment response to the second device, where the RDMA connection establishment response includes the RDMA connection establishment information of the first device.

Step 602: The first device and the second device establish an RDMA connection between the first device and the second device based on the RDMA connection establishment information of the first device and the RDMA connection establishment information of the second device.

For a specific implementation process of step 602, refer to an implementation process of establishing an RDMA connection between two devices in the conventional technology. Details are not described.

In an implementation method, step 601 and step 602 may be performed in a session establishment or modification procedure.

In the foregoing solution, an RDMA technology is used in a 5G network or a future communication network for data transmission, so that CPU overheads of data transmission can be reduced and requirements of services for high throughput and low latency characteristics can be satisfied.

The following describes specific examples of the first device and the second device.

Case 1: The first device is a base station, and the second device is a UPF.

For example, the UPF may be a branching point (branching point, BP) UPF or an uplink classifier (uplink classifier, UL CL) UPF.

Based on the case 1, in an implementation method, step 601 may be implemented in the following manner: The first device receives the RDMA connection establishment information of the second device from the second device through an interface between the first device and the second device, and sends the RDMA connection establishment information of the first device to the second device through the interface between the first device and the second device.

Based on the case 1, in another implementation method, step 601 may be implemented in the following manner: The second device sends the RDMA connection establishment information of the second device to an SMF, the SMF sends the RDMA connection establishment information of the second device to an AMF, and the AMF sends the RDMA connection establishment information of the second device to the first device through an interface between the first device and the AMF; the first device sends the RDMA connection establishment information of the first device to the AMF through the interface between the first device and the AMF, the AMF sends the RDMA connection establishment information of the first device to the SMF, and the SMF sends the RDMA connection establishment information of the first device to the second device.

Case 2: The first device is a base station, and the second device is an AMF.

Based on the case 2, in an implementation method, step 601 may be implemented in the following manner: The first device receives the RDMA connection establishment information of the second device from the second device through an interface between the first device and the second device, and sends the RDMA connection establishment information of the first device to the second device through the interface between the first device and the second device.

Case 3: The first device is a UPF, and the second device is a base station.

For example, the UPF may be a BP UPF or a UL CL UPF.

Based on the case 3, in an implementation method, step 601 may be implemented in the following manner: The first device receives the RDMA connection establishment information of the second device from the second device through an interface between the first device and the second device, and sends the RDMA connection establishment information of the first device to the second device through the interface between the first device and the second device.

Based on the case 3, in another implementation method, step 601 may be implemented in the following manner: The second device sends the RDMA connection establishment information of the second device to an AMF through an interface between the second device and the AMF, the AMF sends the RDMA connection establishment information of the second device to an SMF, and the SMF sends the RDMA connection establishment information of the second device to the first device; the first device sends the RDMA connection establishment information of the first device to the SMF through an interface between the first device and the SMF, the SMF sends the RDMA connection establishment information of the first device to the AMF, and the AMF sends the RDMA connection establishment information of the first device to the second device through the interface between the second device and the AMF.

For example, when the UPF in the case 3 is a BP UPF or a UL CL UPF, the following operations may be further performed: The first device (that is, the BP UPF or the UL CL UPF) sends the RDMA connection establishment information of the first device to an anchor UPF, and receives RDMA connection establishment information of the anchor UPF from the anchor UPF; the first device and the anchor UPF establish an RDMA connection between the anchor UPF and the first device based on the RDMA connection establishment information of the first device and the RDMA connection establishment information of the anchor UPF. The anchor UPF is also referred to as a protocol data unit session anchor (protocol data unit session anchor, PSA) UPF.

Case 4: The first device is an AMF, and the second device is a base station or an SMF.

Based on the case 4, in an implementation method, step 601 may be implemented in the following manner: The first device receives the RDMA connection establishment information of the second device from the second device through an interface between the first device and the second device, and sends the RDMA connection establishment information of the first device to the second device through the interface between the first device and the second device.

Case 5: The first device is an SMF, and the second device is a UPF.

Based on the case 5, in an implementation method, step 601 may be implemented in the following manner: The first device receives the RDMA connection establishment information of the second device from the second device through an interface between the first device and the second device, and sends the RDMA connection establishment information of the first device to the second device through the interface between the first device and the second device.

The foregoing describes a connection establishment process between the first device and the second device, and describes different specific examples of the first device and the second device. The following describes a disconnection process between the first device and the second device.

In an implementation method, the first device receives RDMA disconnection information of the second device from the second device, and sends RDMA disconnection information of the first device to the second device. The first device and the second device disconnect the RDMA connection between the first device and the second device based on the RDMA disconnection information of the first device and the RDMA disconnection information of the second device.

For example, that the first device receives RDMA disconnection information of the second device from the second device, and sends RDMA disconnection information of the first device to the second device may be as follows: The second device sends an RDMA disconnection request to the first device, where the RDMA disconnection request includes the RDMA disconnection information of the second device; and the first device sends an RDMA disconnection response to the second device if the first device receives the RDMA disconnection request, where the RDMA disconnection response includes the RDMA disconnection information of the first device. Optionally, the first device receives the RDMA disconnection request, and determines whether disconnection of the RDMA connection between the first device and the second device is allowed. If disconnection of the RDMA connection between the first device and the second device is allowed, the first device sends the RDMA disconnection response to the second device. If disconnection of the RDMA connection between the first device and the second device is not allowed, the first device does not send the RDMA disconnection response to the second device.

For example, that the first device receives RDMA disconnection information of the second device from the second device, and sends RDMA disconnection information of the first device to the second device may alternatively be as follows: The first device sends an RDMA disconnection request to the second device, where the RDMA disconnection request includes the RDMA disconnection information of the first device; and the second device sends an RDMA disconnection response to the first device if the second device receives the RDMA disconnection request, where the RDMA disconnection response includes the RDMA disconnection information of the second device. Optionally, the second device receives the RDMA disconnection request, and determines whether disconnection of the RDMA connection between the first device and the second device is allowed. If disconnection of the RDMA connection between the first device and the second device is allowed, the second device sends the RDMA disconnection response to the first device. If disconnection of the RDMA connection between the first device and the second device is not allowed, the second device does not send the RDMA disconnection response to the first device.

FIG. 7 is a schematic flowchart of a communication method according to an embodiment of this application. The method is performed by a third device or a module (for example, a chip) of the third device, and a fourth device or a module (for example, a chip) of the fourth device. The following uses an example in which the third device and the fourth device perform the method for description.

The method includes the following steps.

Step 701: The third device determines to establish an RDMA connection.

In an implementation method, step 701 may be as follows: The third device receives a request message from a UE, where the request message is for requesting to establish the RDMA connection. The third device determines, based on the request message, to establish the RDMA connection.

In another implementation method, step 701 may be as follows: The third device receives a QoS request, where the QoS request includes a QoS level, and a data transmission mode corresponding to the QoS level is RDMA transmission. The third device determines, based on the QoS request, to establish the RDMA connection.

In another implementation method, step 701 may be as follows: The third device determines, based on local configuration information of the third device, to establish the RDMA connection.

Step 702: The third device sends indication information to the fourth device. Correspondingly, the fourth device receives the indication information.

The indication information indicates to use an RDMA scheme to perform data transmission.

For example, the third device is an SMF, and the fourth device is a base station, a UPF, or an AMF.

For example, the third device is an AMF, and the fourth device is a base station, a UPF, or an SMF.

In the foregoing solution, when determining to establish the RDMA connection, the third device indicates the fourth device to establish the RDMA connection. Therefore, an RDMA technology is used in a 5G network or a future communication network for data transmission, so that CPU overheads of data transmission can be reduced and requirements of services for high throughput and low latency characteristics can be satisfied.

The embodiment in FIG. 6 and the embodiment in FIG. 7 may be combined for implementation, or may be separately implemented. This is not limited in this application.

With reference to specific examples, the following describes specific implementations of combining the embodiment in FIG. 6 and the embodiment in FIG. 7.

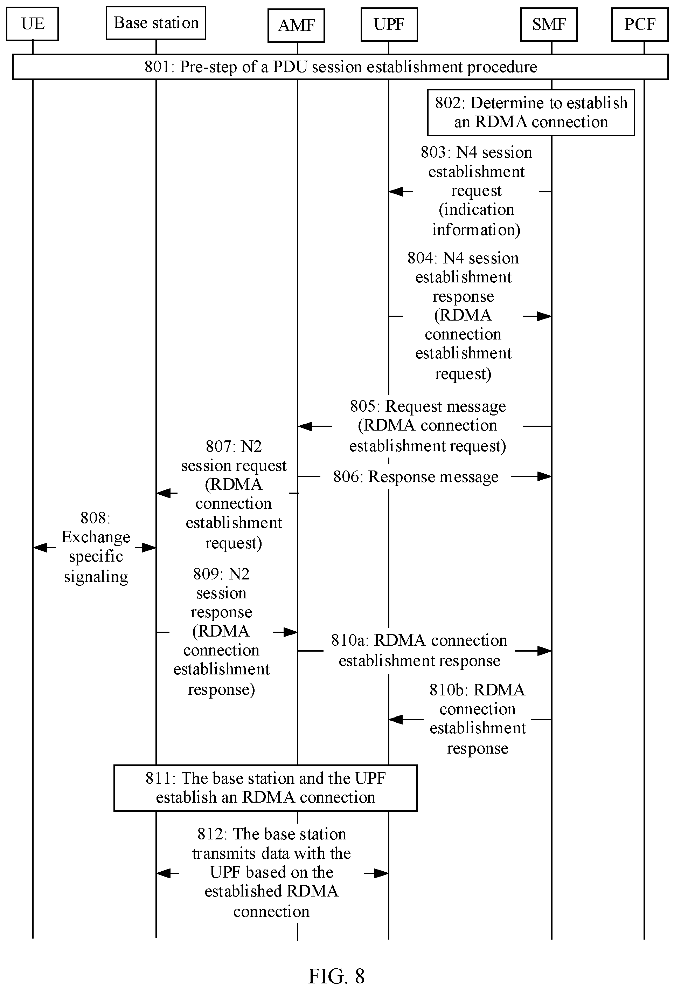

FIG. 8 is a schematic flowchart of a communication method according to an embodiment of this application. In the method, an RDMA connection is established for data transmission in a PDU session establishment procedure, a UPF sends an RDMA connection establishment request, and a base station returns an RDMA connection establishment response. The method includes the following steps.

Step 801: A pre-step of a PDU session establishment procedure is performed.

Step 801 specifically includes step 1 to step 9 of the PDU session establishment procedure. For details, refer to descriptions about the PDU session establishment procedure in section 4.3.2.2.1 in 3GPP TS 23.502.

Step 802: An SMF determines to establish an RDMA connection.

For a specific implementation of this step, refer to step 701 in the embodiment in FIG. 7.

Step 803: The SMF sends an N4 session establishment request (N4 Session Establishment Request) to the UPF. Correspondingly, the UPF receives the N4 session establishment request.

The N4 session establishment request includes indication information, and the indication information indicates to use an RDMA scheme to perform data transmission.

The indication information may be carried in fixed bits of the N4 session establishment request, and occupies a few bits or bytes.

Step 804: The UPF sends an N4 session establishment response (N4 Session Establishment Response) to the SMF. Correspondingly, the SMF receives the N4 session establishment response.

The N4 session establishment response includes an RDMA connection establishment request, and the RDMA connection establishment request includes RDMA connection establishment information of the UPF.

Step 805: The SMF sends a request message to an AMF. Correspondingly, the AMF receives the request message.

The request message includes the RDMA connection establishment request.

For example, the request message may be Namf_Communication_N1N2MessageTransfer Request.

Step 806: The AMF sends a response message to the SMF. Correspondingly, the SMF receives the response message.

For example, the response message may be Namf_Communication_N1N2MessageTransfer Response.

Step 807: The AMF sends an N2 session request to the base station. Correspondingly, the base station receives the N2 session request.

The N2 session request includes an RDMA connection establishment request. The base station receives the RDMA connection establishment request, and obtains connection establishment information of the UPF from the RDMA connection establishment request.

For example, the N2 session request may be N2 PDU Session Request.

Step 808: The base station exchanges specific signaling with a UE.

Specifically, in an access network specific resource setup (AN-specific resource setup) process, the base station exchanges specific signaling with the UE. For details, refer to section 4.3.2.2.1 in 3GPP TS 23.502.

Step 809: The base station sends an N2 session response to the AMF. Correspondingly, the AMF receives the N2 session response.

The N2 session response includes an RDMA connection establishment response, and the RDMA connection establishment response includes RDMA connection establishment information of the base station.

For example, the N2 session response may be N2 PDU Session Response.

Step 810a: The AMF sends the RDMA connection establishment response to the SMF. Correspondingly, the SMF receives the RDMA connection establishment response.

Step 810b: The SMF sends the RDMA connection establishment response to the UPF. Correspondingly, the UPF receives the RDMA connection establishment response.

The UPF obtains the RDMA connection establishment information of the base station from the RDMA connection establishment response.

Step 811: The base station and the UPF establish the RDMA connection.

For example, the UPF and the base station establish a connection to each other based on the RDMA connection establishment information of the base station and the RDMA connection establishment information of the UPF. For a specific implementation process of connection establishment, refer to related descriptions in the conventional technology. Details are not described again.

Step 812: The base station transmits data with the UPF based on the established RDMA connection.

In the foregoing solution, the RDMA connection between the base station and the UPF is established in the PDU session establishment procedure, so that data can be transmitted between the base station and the UPF in an RDMA scheme. This can meet requirements of services for high throughput and low latency characteristics, and reduce CPU overheads.

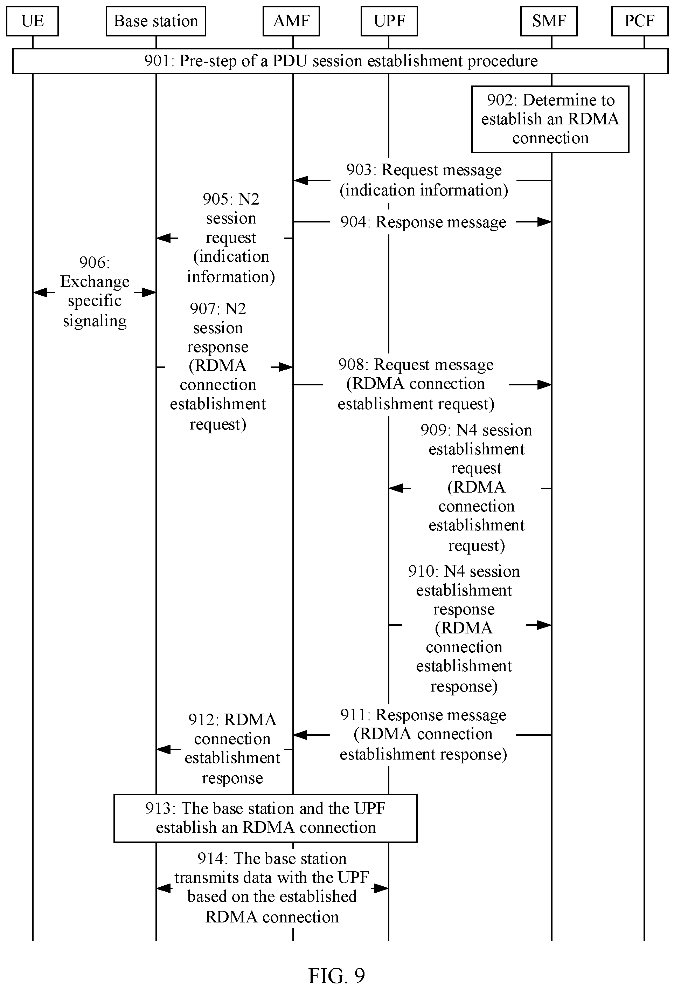

FIG. 9 is a schematic flowchart of a communication method according to an embodiment of this application. In the method, an RDMA connection is established for data transmission in a PDU session establishment procedure, a base station sends an RDMA connection establishment request, and a UPF returns an RDMA connection establishment response. The method includes the following steps.

Step 901: A pre-step of a PDU session establishment procedure is performed.

Step 901 specifically includes step 1 to step 9 of the PDU session establishment procedure. For details, refer to descriptions about the PDU session establishment procedure in section 4.3.2.2.1 in 3GPP TS 23.502.

Step 902: An SMF determines to establish an RDMA connection.

For a specific implementation of this step, refer to step 701 in the embodiment in FIG. 7.

Step 903: The SMF sends a request message to an AMF. Correspondingly, the AMF receives the request message.

The request message includes indication information, and the indication information indicates to use an RDMA scheme to perform data transmission.

The indication information may be carried in fixed bits of the N4 session establishment request, and occupies a few bits or bytes.

For example, the request message may be Namf_Communication_N1N2MessageTransfer Request.

Step 904: The AMF sends a response message to the SMF. Correspondingly, the SMF receives the response message.

For example, the response message may be Namf_Communication_N1N2MessageTransfer Response.

Step 905: The AMF sends an N2 session request to the base station. Correspondingly, the base station receives the N2 session request.

The N2 session request includes the indication information.

For example, the N2 session request may be N2 PDU Session Request.

Step 906: The base station exchanges specific signaling with UE.

Specifically, in an access network specific resource setup (AN-specific resource setup) process, the base station exchanges specific signaling with the UE. For details, refer to section 4.3.2.2.1 in 3GPP TS 23.502.

Step 907: The base station sends an N2 session response to the AMF. Correspondingly, the AMF receives the N2 session response.

The N2 session response includes an RDMA connection establishment request, and the RDMA connection establishment request includes RDMA connection establishment information of the base station.

For example, the N2 session response may be N2 PDU Session Response.

Step 908: The AMF sends a request message to an SMF. Correspondingly, the SMF receives the request message.

The request message includes the RDMA connection establishment request.

For example, the request message may be Namf_PDUSession_UpdateSMContext_Request.

Step 909: The SMF sends an N4 session establishment request (N4 Session Establishment Request) to the UPF. Correspondingly, the UPF receives the N4 session establishment request.

The N4 session establishment request includes the RDMA connection establishment request.

Step 910: The UPF sends an N4 session establishment response (N4 Session Establishment Response) to the SMF. Correspondingly, the SMF receives the N4 session establishment response.

The N4 session establishment response includes an RDMA connection establishment response, and the RDMA connection establishment response includes RDMA connection establishment information of the UPF.

Step 911: The SMF sends a response message to the AMF. Correspondingly, the AMF receives the response message.

The response message includes the RDMA connection establishment response.

For example, the response message may be Namf_PDUSession_UpdateSMContext_Response.

Step 912: The AMF sends the RDMA connection establishment response to the base station. Correspondingly, the base station receives the RDMA connection establishment response.

The base station receives the RDMA connection establishment response, and obtains connection establishment information of the UPF from the RDMA connection establishment response.

Step 913: The base station and the UPF establish an RDMA connection.

For example, the UPF and the base station establish a connection to each other based on the RDMA connection establishment information of the base station and the RDMA connection establishment information of the UPF. For a specific implementation process of connection establishment, refer to related descriptions in the conventional technology. Details are not described again.

Step 914: The base station transmits data with the UPF based on the established RDMA connection.

In the foregoing solution, the RDMA connection between the base station and the UPF is established in the PDU session establishment procedure, so that data can be transmitted between the base station and the UPF in an RDMA scheme. This can meet requirements of services for high throughput and low latency characteristics, and reduce CPU overheads.

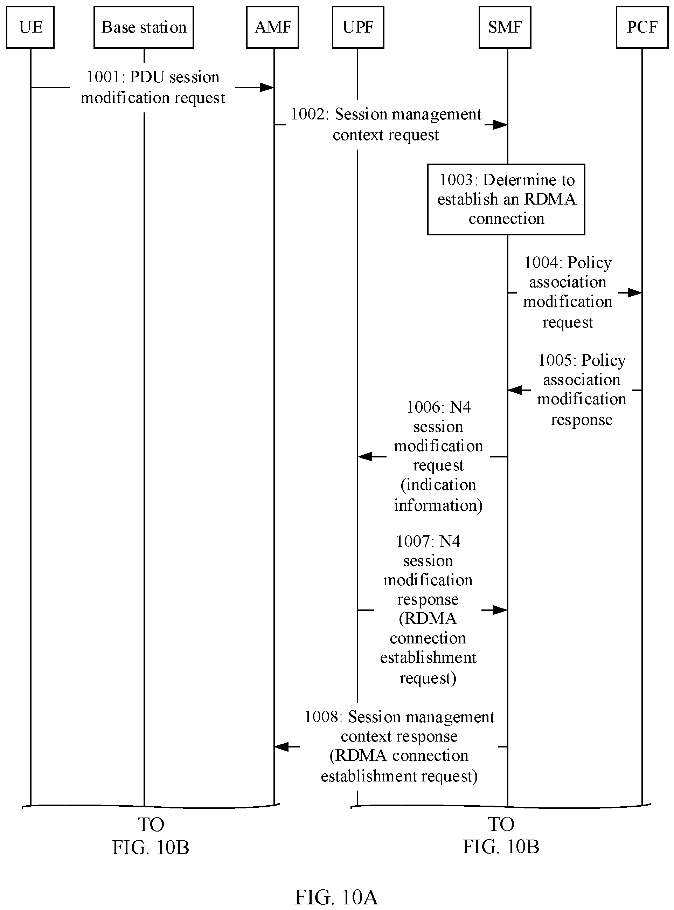

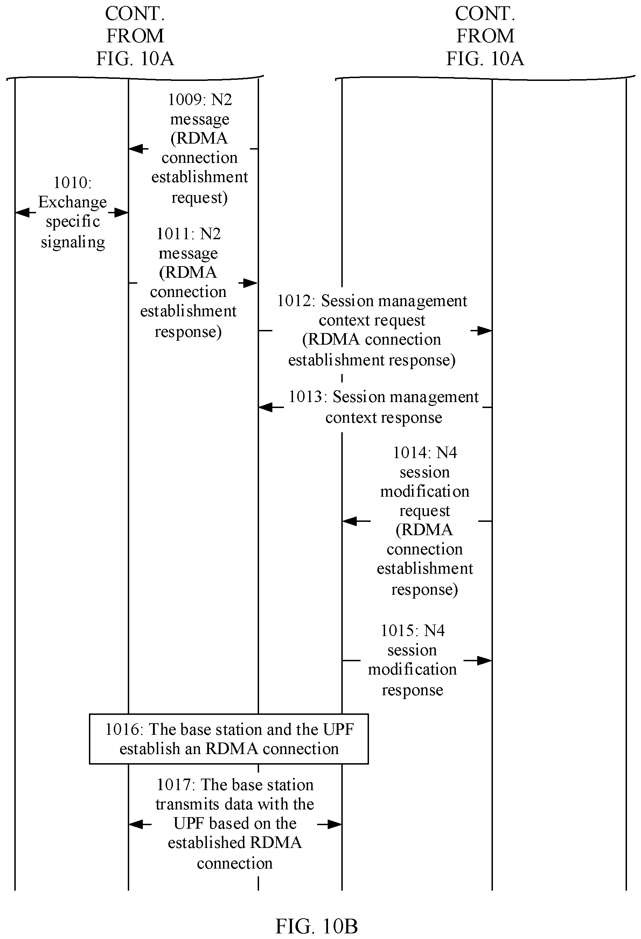

FIG. 10A and FIG. 10B are a schematic flowchart of a communication method according to an embodiment of this application. In the method, an RDMA connection is established for data transmission in a PDU session modification procedure, a UPF sends an RDMA connection establishment request, and a base station returns an RDMA connection establishment response. The method includes the following steps.

Step 1001: A UE sends a PDU session modification request (PDU Session Modification Request) to an AMF. Correspondingly, the AMF receives the PDU session modification request.

The PDU session modification request is for requesting to modify a PDU session.

Step 1002: The AMF sends a session management context request to an SMF. Correspondingly, the SMF receives the session management context request.

The session management context request is for requesting the SMF to modify corresponding information.

For example, the session management context request is Nsmf PDUSession UpdateSMcontext Request.

Step 1003: The SMF determines to establish an RDMA connection.

For a specific implementation of this step, refer to step 701 in the embodiment in FIG. 7.

Step 1004: The SMF sends a policy association modification request to a PCF. Correspondingly, the PCF receives the policy association modification request.

For example, the policy association modification request may be PCF_initiated SM Policy Association Modification Request.

Step 1005: The PCF sends a policy association modification response to the SMF. Correspondingly, the SMF receives the policy association modification response.

For example, the policy association modification response may be PCF_initiated SM Policy Association Modification Response.

In step 1004 and step 1005, the PCF and the SMF exchange session management information.

Step 1006: The SMF sends an N4 session modification request (N4 Session Modification Request) to the UPF. Correspondingly, the UPF receives the N4 session modification request.

The N4 session modification request includes indication information, and the indication information indicates to use an RDMA scheme to perform data transmission.

The indication information may be carried in fixed bits of the N4 session establishment request, and occupies a few bits or bytes.

Step 1007: The UPF sends an N4 session modification response (N4 Session Modification Response) to the SMF. Correspondingly, the SMF receives the N4 session modification response.

The N4 session modification response includes an RDMA connection establishment request, and the RDMA connection establishment request includes RDMA connection establishment information of the UPF. For descriptions of the RDMA connection establishment information of the UPF, refer to the foregoing embodiments.

Step 1008: The SMF sends a session management context response to the AMF. Correspondingly, the AMF receives the session management context response.

The session management context response includes the RDMA connection establishment request.

For example, the session management context response is Nsmf PDUSession UpdateSMcontext Response.

Step 1009: The AMF sends an N2 message to the base station. Correspondingly, the base station receives the N2 message.

The N2 message includes the RDMA connection establishment request. The base station receives the RDMA connection establishment request, and obtains connection establishment information of the UPF from the RDMA connection establishment request.

Step 1010: The base station exchanges specific signaling with a UE.

Specifically, in an access network specific resource setup () process, the base station exchanges specific signaling with the UE. For details, refer to section 4.3.3.2-1 in 3GPP TS 23.502.

Step 1011: The base station sends an N2 message to the AMF. Correspondingly, the AMF receives the N2 message.

The N2 message includes an RDMA connection establishment response, and the RDMA connection establishment response includes RDMA connection establishment information of the base station. For descriptions of the RDMA connection establishment information of the base station, refer to the foregoing embodiments.

Step 1012: The AMF sends a session management context request to an SMF. Correspondingly, the SMF receives the session management context request.

The session management context request includes the RDMA connection establishment response.

For example, the session management context request is Nsmf PDUSession UpdateSMcontext Request.

Step 1013: The SMF sends a session management context response to the AMF. Correspondingly, the AMF receives the session management context response.

For example, the session management context response is Nsmf PDUSession UpdateSMcontext Response.

Step 1014: The SMF sends an N4 session modification request to the UPF. Correspondingly, the UPF receives the N4 session modification request.

The N4 session modification request includes the RDMA connection establishment response.

Step 1015: The UPF sends an N4 session modification response to the SMF. Correspondingly, the SMF receives the N4 session modification response.

Step 1016: The base station and the UPF establish an RDMA connection.

The UPF and the base station establish a connection to each other based on the RDMA connection establishment information of the base station and the RDMA connection establishment information of the UPF. For a specific implementation process of connection establishment, refer to related descriptions in the conventional technology. Details are not described again.

Step 1017: The base station transmits data with the UPF based on the established RDMA connection.

In the foregoing solution, the RDMA connection between the base station and the UPF is established in the PDU session modification procedure, so that data can be transmitted between the base station and the UPF in an RDMA scheme. This can meet requirements of services for high throughput and low latency characteristics, and reduce CPU overheads.

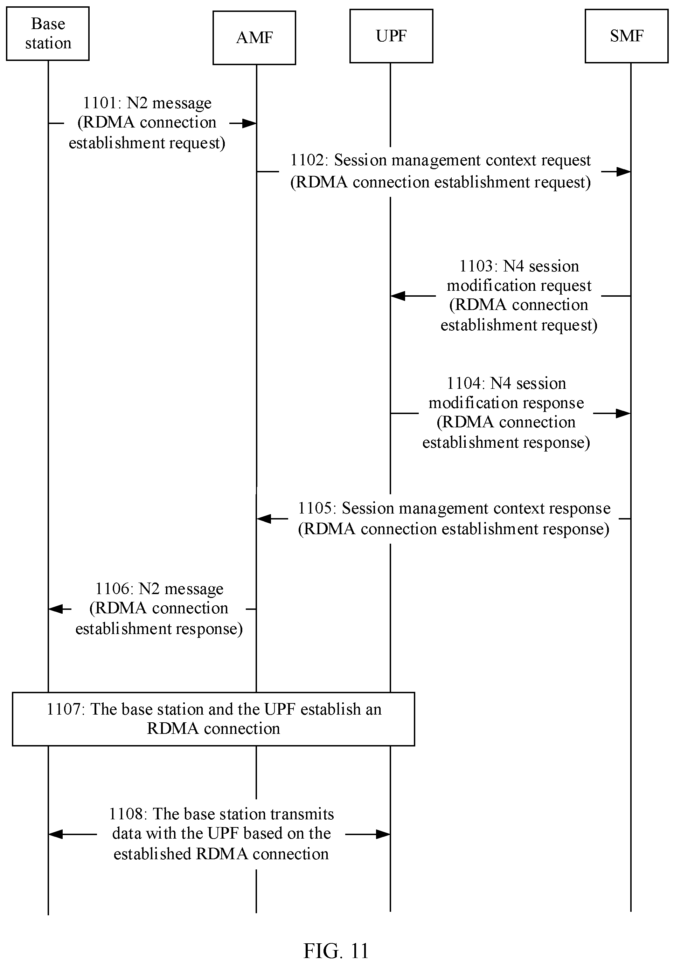

FIG. 11 is a schematic flowchart of a communication method according to an embodiment of this application. In the method, an RDMA connection is established for data transmission in a PDU session modification procedure, a base station sends an RDMA connection establishment request, and a UPF returns an RDMA connection establishment response. The method includes the following steps.

Step 1101: The base station sends an N2 message to an AMF. Correspondingly, the AMF receives the N2 message.

The N2 message includes an RDMA connection establishment request, and the RDMA connection establishment request includes RDMA connection establishment information of the base station.

Step 1102: The AMF sends a session management context request to an SMF. Correspondingly, the SMF receives the session management context request.

The session management context request is for requesting the SMF to modify corresponding information, and the session management context request includes the RDMA connection establishment request.

For example, the session management context request is Nsmf PDUSession UpdateSMcontext Request.

Step 1103: The SMF sends an N4 session modification request (N4 Session Modification Request) to the UPF. Correspondingly, the UPF receives the N4 session modification request.

The N4 session modification request includes the RDMA connection establishment request.

Step 1104: The UPF sends an N4 session modification response (N4 Session Modification Response) to the SMF. Correspondingly, the SMF receives the N4 session modification response.

The N4 session modification response includes an RDMA connection establishment response, and the RDMA connection establishment response includes RDMA connection establishment information of the UPF. For descriptions of the RDMA connection establishment information of the UPF, refer to the foregoing embodiments.

Step 1105: The SMF sends a session management context response to the AMF. Correspondingly, the AMF receives the session management context response.

The session management context response includes the RDMA connection establishment response.

For example, the session management context response is Nsmf PDUSession UpdateSMcontext Response.

Step 1106: The AMF sends an N2 message to the base station. Correspondingly, the base station receives the N2 message.

The N2 message includes the RDMA connection establishment response. The base station receives the RDMA connection establishment response, and obtains the connection establishment information of the UPF from the RDMA connection establishment response.

Step 1107: The base station and the UPF establish an RDMA connection.

The UPF and the base station establish a connection to each other based on the RDMA connection establishment information of the base station and the RDMA connection establishment information of the UPF. For a specific implementation process of connection establishment, refer to related descriptions in the conventional technology. Details are not described again.

Step 1108: The base station transmits data with the UPF based on the established RDMA connection.

In the foregoing solution, the RDMA connection between the base station and the UPF is established in the PDU session modification procedure, so that data can be transmitted between the base station and the UPF in an RDMA scheme. This can meet requirements of services for high throughput and low latency characteristics, and reduce CPU overheads.

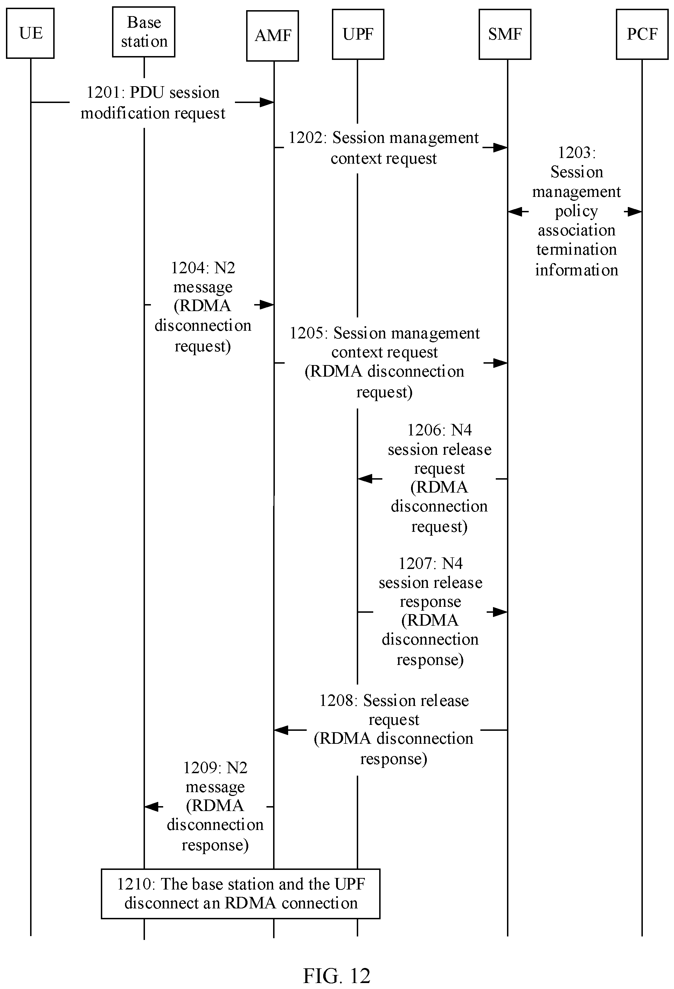

FIG. 12 is a schematic flowchart of a communication method according to an embodiment of this application. In the method, an RDMA connection release procedure is described. In addition, a base station sends an RDMA disconnection request, and a UPF returns an RDMA disconnection response. The method includes the following steps.

Step 1201: A UE sends a PDU session modification request to an AMF. Correspondingly, the AMF receives the PDU session modification request.

The PDU session modification request is for requesting to release a PDU session.

Step 1202: The AMF sends a session management context request to an SMF. Correspondingly, the SMF receives the session management context request.

The session management context request is for requesting the SMF to modify corresponding information.

For example, the session management context request is Nsmf PDUSession UpdateSMcontext Request.

Step 1203: The SMF and a PCF exchange session management policy association termination information (SM policy Association Termination).

Step 1204: The base station sends N2 information to the AMF. Correspondingly, the AMF receives the N2 message.

The N2 message includes an RDMA disconnection request, and the RDMA disconnection request is for requesting to release an RDMA connection. The RDMA disconnection request includes RDMA disconnection information of the base station, and the RDMA disconnection information of the base station includes a port identifier and a queue pair identifier of the base station. Optionally, the RDMA disconnection information of the base station further includes access permission information and/or a virtual memory address. The virtual memory address indicates a memory that needs to be released.

Step 1205: The AMF sends a session management context request to the SMF. Correspondingly, the SMF receives the session management context request.

The session management context request includes the RDMA disconnection request.

For example, the session management context request is Nsmf PDUSession UpdateSMcontext Request.

Step 1206: The SMF sends an N4 session release request to the UPF. Correspondingly, the UPF receives the N4 session release request.

The N4 session release request includes the RDMA disconnection request.

After receiving the RDMA disconnection request, the UPF determines, based on the RDMA disconnection information of the base station in the disconnection request, whether disconnection is allowed. If disconnection is allowed, the following step 1207 to step 1210 are performed. If disconnection is not allowed, the disconnection request is rejected.

Step 1207: The UPF sends an N4 session release response to the SMF. Correspondingly, the SMF receives the N4 session release response.

The N4 session release response includes an RDMA disconnection response, and the RDMA disconnection response includes RDMA disconnection information of the UPF. The RDMA disconnection information of the UPF includes a port identifier and a queue pair identifier of the UPF. Optionally, the RDMA disconnection information of the UPF further includes access permission information and/or a virtual memory address. The virtual memory address indicates a memory that needs to be released.

Step 1208: The SMF sends a session release request to the AMF. Correspondingly, the AMF receives the session release request.

The session release request includes the RDMA disconnection response.

For example, the session release request is Nsmf PDUSession ReleaseSMcontext Request.

Step 1209: The AMF sends an N2 message to the base station. Correspondingly, the base station receives the N2 message.

The N2 message includes the RDMA disconnection response.

Step 1210: The UPF disconnects the RDMA connection from the base station.

The UPF and the base station disconnect each other based on the RDMA disconnection information of the base station and the RDMA disconnection information of the UPF. For a specific implementation process of disconnection, refer to related descriptions in the conventional technology. Details are not described again.

In the foregoing solution, a procedure of releasing an RDMA connection on a user plane is implemented, so that an RDMA connection can be released in time when the connection is not required, thereby saving resources.

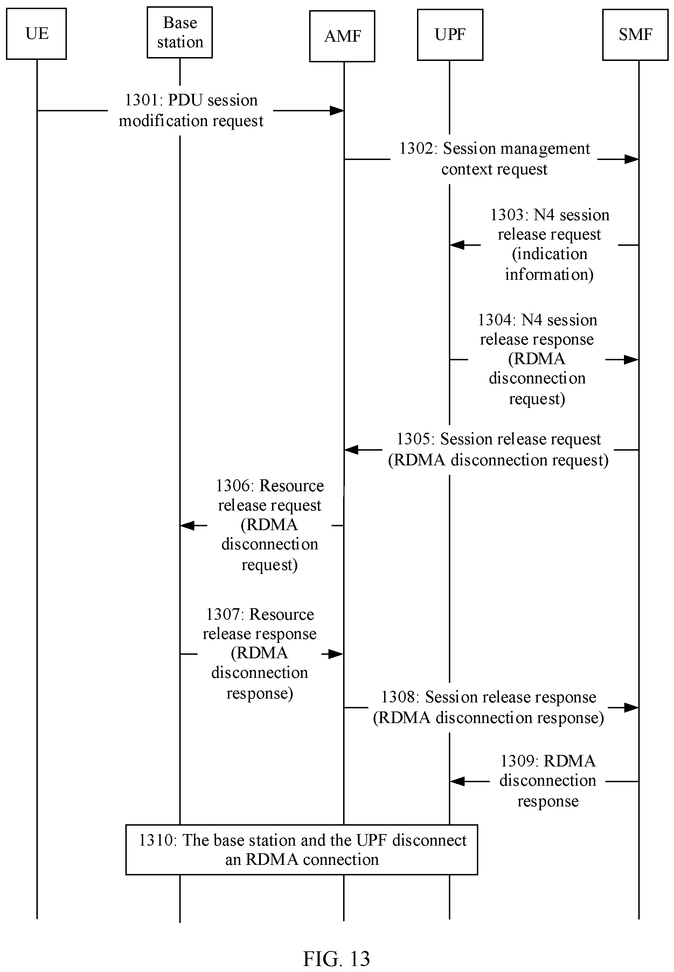

FIG. 13 is a schematic flowchart of a communication method according to an embodiment of this application. In the method, an RDMA connection release procedure is described. In addition, a UPF sends an RDMA disconnection request, and a base station returns an RDMA disconnection response. The method includes the following steps.

Step 1301: A UE sends a PDU session modification request to an AMF. Correspondingly, the AMF receives the PDU session modification request.

The PDU session modification request is for requesting to release a PDU session.

Step 1302: The AMF sends a session management context request to an SMF. Correspondingly, the SMF receives the session management context request.

The session management context request is for requesting the SMF to modify corresponding information.

For example, the session management context request is Nsmf PDUSession UpdateSMcontext Request.

Step 1303: The SMF sends an N4 session release request to the UPF. Correspondingly, the UPF receives the N4 session release request.

The N4 session release request includes indication information, and the indication information indicates to disconnect an RDMA connection.

Step 1304: The UPF sends an N4 session release response to the SMF. Correspondingly, the SMF receives the N4 session release response.

The N4 session release response includes an RDMA disconnection request, and the RDMA disconnection request includes RDMA disconnection information of the UPF. The RDMA disconnection information of the UPF includes a port identifier and a queue pair identifier of the UPF. Optionally, the RDMA disconnection information of the UPF further includes access permission information and/or a virtual memory address. The virtual memory address indicates a memory that needs to be released.

Step 1305: The SMF sends a session release request to the AMF. Correspondingly, the AMF receives the session release request.

The session release request includes the RDMA disconnection request.

For example, the session release request is Nsmf PDUSession ReleaseSMcontext Request.

Step 1306: The AMF sends a resource release request to the base station. Correspondingly, the base station receives the resource release request.

The resource release request includes the RDMA disconnection request.

After receiving the RDMA disconnection request, the base station determines, based on the RDMA disconnection information of the UPF in the disconnection request, whether disconnection is allowed. If disconnection is allowed, the following step 1307 to step 1310 are performed. If disconnection is not allowed, the disconnection request is rejected.

Step 1307: The base station sends a resource release response to the AMF. Correspondingly, the AMF receives the resource release response.

The resource release response includes an RDMA disconnection response, and the RDMA disconnection response includes RDMA disconnection information of the base station. The RDMA disconnection information of the base station includes a port identifier and a queue pair identifier of the base station. Optionally, the RDMA disconnection information of the base station further includes access permission information and/or a virtual memory address. The virtual memory address indicates a memory that needs to be released.

Step 1308: The AMF sends a session release response to the SMF. Correspondingly, the SMF receives the session release response.

The session release response includes the RDMA disconnection response.

For example, the session release response is Nsmf PDUSession ReleaseSMcontext Response.

Step 1309: The SMF sends the RDMA disconnection response to the UPF. Correspondingly, the UPF receives the RDMA disconnection response.

Step 1310: The UPF disconnects the RDMA connection from the base station.

The UPF and the base station disconnect each other based on the RDMA disconnection information of the base station and the RDMA disconnection information of the UPF. For a specific implementation process of disconnection, refer to related descriptions in the conventional technology. Details are not described again.

In the foregoing solution, a procedure of releasing an RDMA connection on a user plane is implemented, so that an RDMA connection can be released in time when the connection is not required, thereby saving resources.

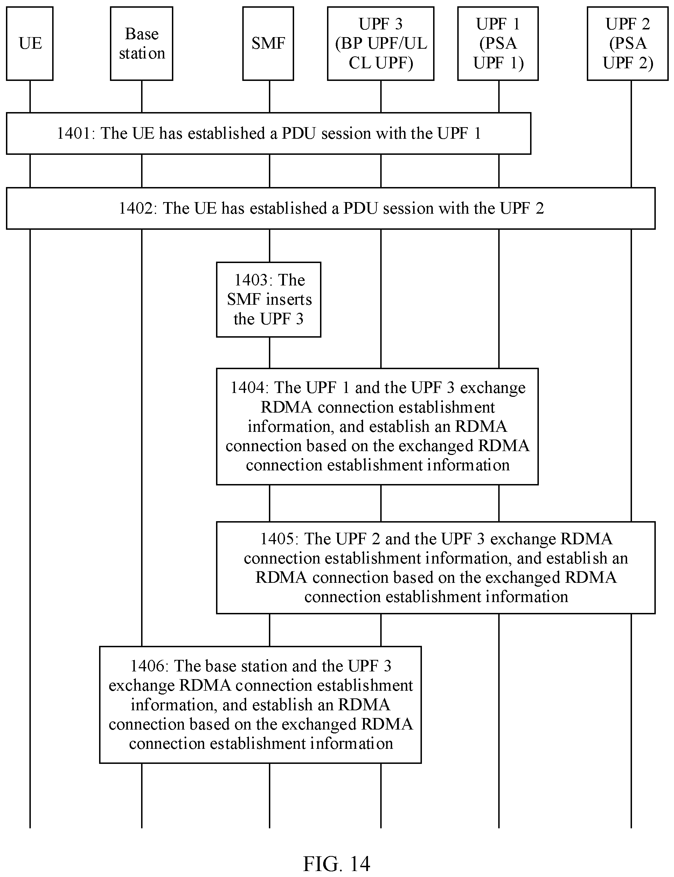

FIG. 14 is a schematic flowchart of a communication method according to an embodiment of this application. The method is used for data transmission based on an RDMA scheme in a BP/UL CL splitting scenario. The method includes the following steps.

Step 1401: A UE has established a PDU session with a UPF 1.

The UPF 1 is a PSA UPF, and is referred to as a PSA UPF 1.

Step 1402: The UE has established a PDU session with a UPF 2.

The UPF 2 is a PSA UPF, and is referred to as a PSA UPF 2.

Step 1403: An SMF inserts a UPF 3.

The UPF 3 is a BP UPF or a UL CL UPF.

Step 1404: The UPF 1 and the UPF 3 exchange RDMA connection establishment information, and establish an RDMA connection based on the exchanged RDMA connection establishment information.

Specifically, the UPF 1 sends RDMA connection establishment information of the UPF 1 to the UPF 3, and the UPF 3 sends RDMA connection establishment information of the UPF 3 to the UPF 1. For specific content of the connection establishment information, refer to the descriptions in the foregoing embodiments.

The UPF 1 and the UPF 3 may exchange the RDMA connection establishment information through an N9 interface, or exchange the RDMA connection establishment information via forwarding of the SMF.

Step 1405: The UPF 2 and the UPF 3 exchange RDMA connection establishment information, and establish an RDMA connection based on the exchanged RDMA connection establishment information.

Specifically, the UPF 2 sends RDMA connection establishment information of the UPF 2 to the UPF 3, and the UPF 3 sends the RDMA connection establishment information of the UPF 3 to the UPF 2. For specific content of the connection establishment information, refer to the descriptions in the foregoing embodiments.

The UPF 2 and the UPF 3 may exchange the RDMA connection establishment information through an N9 interface, or exchange the RDMA connection establishment information via forwarding of the SMF.

Step 1406: A base station and the UPF 3 exchange RDMA connection establishment information, and establish an RDMA connection based on the exchanged RDMA connection establishment information.

Specifically, the base station sends RDMA connection establishment information of the base station to the UPF 3, and the UPF 3 sends the RDMA connection establishment information of the UPF 3 to the base station. For specific content of the connection establishment information, refer to the descriptions in the foregoing embodiments.

The base station and the UPF 3 may exchange the RDMA connection establishment information through an N3 interface, or exchange the RDMA connection establishment information via forwarding of an AMF or the SMF.

In the foregoing solution, in the BP UPF/UL CL UPF splitting scenario, an RDMA connection is established by segment, to be specific, an RDMA connection is established between the base station and the UPF 3, an RDMA connection is established between the UPF 3 and the UPF 1, and an RDMA connection is established between the UPF 3 and the UPF 2, so that data transmission based on the RDMA scheme in the BP UPF/UL CL UPF splitting scenario can be implemented, thereby satisfying requirements of services for high throughput and low latency characteristics, and reducing CPU overheads.

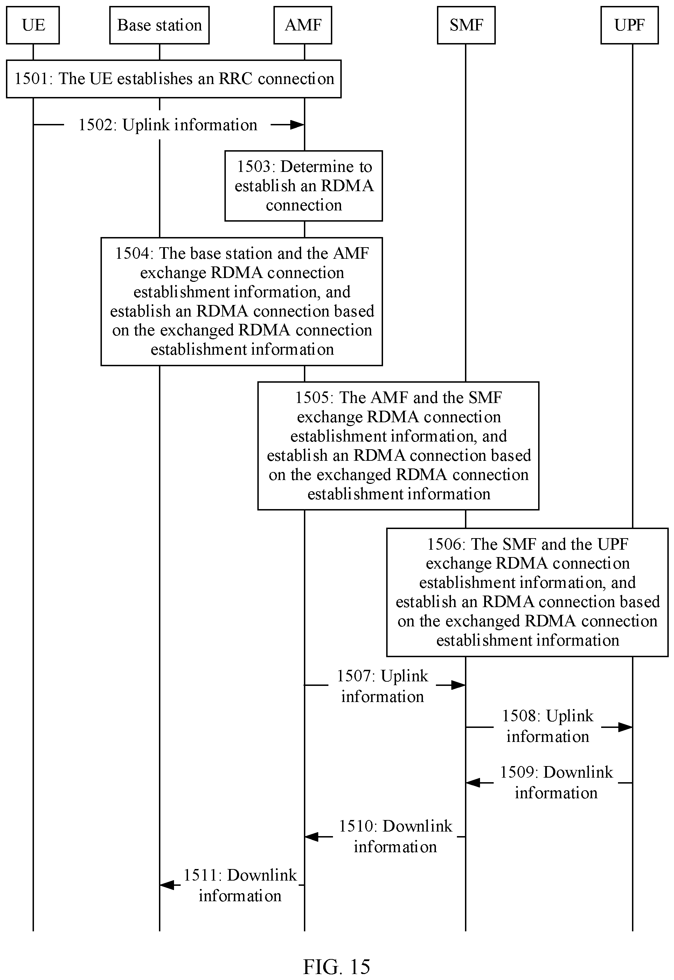

FIG. 15 is a schematic flowchart of a communication method according to an embodiment of this application. The method is used for RDMA-based data transmission in a cellular internet of things (chain internet of things, CIoT) user data packet scenario. The method includes the following steps.

Step 1501: A UE establishes an RRC connection.

Step 1502: The UE sends uplink information to an AMF. Correspondingly, the AMF receives the uplink information.

The uplink information may be an initial UE message or an uplink NAS message.

Step 1503: The AMF determines to establish an RDMA connection.

For a specific implementation of this step, refer to step 701 in the embodiment in FIG. 7.

Step 1504: A base station and the AMF exchange RDMA connection establishment information, and establish an RDMA connection based on the exchanged RDMA connection establishment information.

Specifically, the base station sends RDMA connection establishment information of the base station to the AMF, and the AMF sends RDMA connection establishment information of the AMF to the base station. For specific content of the connection establishment information, refer to the descriptions in the foregoing embodiments.

Step 1505: The AMF and an SMF exchange RDMA connection establishment information, and establish an RDMA connection based on the exchanged RDMA connection establishment information.

Specifically, the AMF sends the RDMA connection establishment information of the AMF to the SMF, and the SMF sends RDMA connection establishment information of the SMF to the AMF. For specific content of the connection establishment information, refer to the descriptions in the foregoing embodiments.

Step 1506: The SMF and a UPF exchange RDMA connection establishment information, and establish an RDMA connection based on the exchanged RDMA connection establishment information.

Specifically, the SMF sends the RDMA connection establishment information of the SMF to the UPF, and the UPF sends RDMA connection establishment information of the UPF to the SMF. For specific content of the connection establishment information, refer to the descriptions in the foregoing embodiments.

After the foregoing three segmented connections are established, uplink and downlink information may be transmitted.

Step 1507: The AMF sends the uplink information to the SMF. Correspondingly, the SMF receives the uplink information.

Specifically, the AMF sends, to the SMF through the RDMA connection between the AMF and the SMF, the uplink information received in step 1502 or uplink information received in another step.

Step 1508: The SMF sends uplink information to a UPF. Correspondingly, the UPF receives the uplink information.

Specifically, the SMF sends the received uplink information to the UPF through the RDMA connection between the SMF and the UPF.

In the foregoing process, the uplink information is sent by the base station to the UPF through the RDMA connections.

Step 1509: The UPF sends downlink information to the SMF. Correspondingly, the SMF receives the downlink information.

Specifically, the UPF sends the downlink information to the SMF through the RDMA connection between the SMF and the UPF.

Step 1510: The SMF sends the downlink information to the AMF. Correspondingly, the AMF receives the downlink information.

Specifically, the SMF sends the downlink information to the AMF through the RDMA connection between the SMF and the AMF.

Step 1511: The AMF sends the downlink information to the base station. Correspondingly, the base station receives the downlink information.

Specifically, the AMF sends the downlink information to the base station through the RDMA connection between the base station and the AMF.

In the foregoing process, the downlink information is sent by the UPF to the base station through the RDMA connections.

In the foregoing solution, in the CIOT user data packet scenario, an RDMA connection is established by segment, to be specific, the RDMA connection is established between the base station and the AMF, the RDMA connection is established between the AMF and the SMF, and the RDMA connection is established between the SMF and the UPF, so that data transmission based on the RDMA scheme in the CIOT user data packet scenario can be implemented, thereby satisfying requirements of services for high throughput and low latency characteristics, and reducing CPU overheads.

It may be understood that, to implement the functions in the foregoing embodiments, the first device, the second device, or the third device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

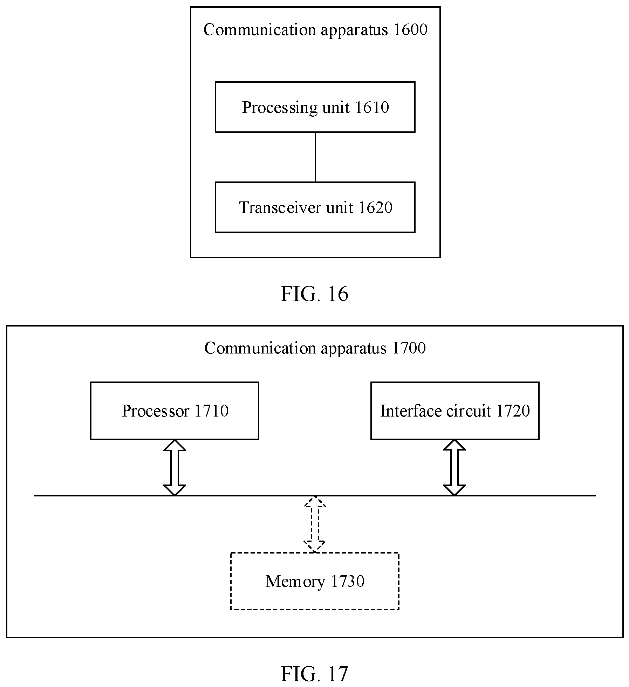

FIG. 16 and FIG. 17 are diagrams of structures of communication apparatuses according to embodiments of this application. These communication apparatuses may be configured to implement functions of the first device, the second device, or the third device in the foregoing method embodiments, and therefore can also implement beneficial effects of the foregoing method embodiments. In embodiments of this application, the communication apparatus may be the first device, the second device, or the third device, or may be a module (for example, a chip) used in the first device, the second device, or the third device.

As shown in FIG. 16, a communication apparatus 1600 includes a processing unit 1610 and a transceiver unit 1620. The communication apparatus 1600 is configured to implement functions of the first device, the second device, or the third device in the foregoing method embodiments.

When the communication apparatus 1600 is configured to implement a function of the first device in the foregoing method embodiments, the transceiver unit 1620 is configured to receive RDMA connection establishment information of a second device from the second device, and send RDMA connection establishment information of the first device to the second device. The processing unit 1610 is configured to establish an RDMA connection between the first device and the second device based on the RDMA connection establishment information of the first device and the RDMA connection establishment information of the second device.

In a possible implementation method, that the transceiver unit 1620 is configured to receive the RDMA connection establishment information of the second device from the second device, and send the RDMA connection establishment information of the first device to the second device specifically includes: receiving indication information, where the indication information indicates to use an RDMA scheme to perform data transmission; sending an RDMA connection establishment request to the second device based on the indication information, where the RDMA connection establishment request includes the RDMA connection establishment information of the first device; and receiving an RDMA connection establishment response from the second device, where the RDMA connection establishment response includes the RDMA connection establishment information of the second device.

In a possible implementation method, that the transceiver unit 1620 is configured to receive the RDMA connection establishment information of the second device from the second device, and send the RDMA connection establishment information of the first device to the second device specifically includes: receiving an RDMA connection establishment request from the second device, where the RDMA connection establishment request includes the RDMA connection establishment information of the second device; and sending an RDMA connection establishment response to the second device, where the RDMA connection establishment response includes the RDMA connection establishment information of the first device.

In a possible implementation method, the first device is an access network device, and the second device is a user plane network element. That the transceiver unit 1620 is configured to receive the RDMA connection establishment information of the second device from the second device specifically includes: receiving the RDMA connection establishment information of the second device through an interface between the first device and the second device; or receiving the RDMA connection establishment information of the second device through an interface between the first device and a mobility management network element, where the RDMA connection establishment information of the second device is sent by the second device to the mobility management network element via a session management network element.

In a possible implementation method, the user plane network element is an uplink classifier user plane network element or a branching point user plane network element.

In a possible implementation method, the first device is an access network device, and the second device is a mobility management network element. That the transceiver unit 1620 is configured to receive the RDMA connection establishment information of the second device from the second device specifically includes: receiving the RDMA connection establishment information of the second device through an interface between the first device and the second device.

In a possible implementation method, the first device is a user plane network element, and the second device is an access network device. That the transceiver unit 1620 is configured to send the RDMA connection establishment information of the first device to the second device specifically includes: sending the RDMA connection establishment information of the first device through an interface between the first device and the second device; or sending the RDMA connection establishment information of the first device through an interface between the first device and a session management network element, where the RDMA connection establishment information of the first device is sent by the session management network element to the second device via a mobility management network element.

In a possible implementation method, the user plane network element is an uplink classifier user plane network element or a branching point user plane network element. The transceiver unit 1620 is further configured to send the RDMA connection establishment information of the first device to an anchor user plane network element, and receive RDMA connection establishment information of the anchor user plane network element from the anchor user plane network element. The processing unit 1610 is further configured to establish an RDMA connection between the anchor user plane network element and the first device based on the RDMA connection establishment information of the first device and the RDMA connection establishment information of the anchor user plane network element.

In a possible implementation method, the first device is a mobility management network element, and the second device is an access network device or a session management network element. That the transceiver unit 1620 is configured to send the RDMA connection establishment information of the first device to the second device specifically includes: sending the RDMA connection establishment information of the first device through an interface between the first device and the second device.

In a possible implementation method, that the transceiver unit 1620 is configured to receive the RDMA connection establishment information of the second device from the second device, and send the RDMA connection establishment information of the first device to the second device specifically includes: in a session establishment or modification procedure, receiving the RDMA connection establishment information of the second device from the second device and sending the RDMA connection establishment information of the first device to the second device.

In a possible implementation method, the transceiver unit 1620 is further configured to receive RDMA disconnection information of the second device from the second device, and send RDMA disconnection information of the first device to the second device. The processing unit 1610 is further configured to disconnect the RDMA connection between the first device and the second device based on the RDMA disconnection information of the first device and the RDMA disconnection information of the second device.

In a possible implementation method, that the transceiver unit 1620 is configured to receive the RDMA disconnection information of the second device from the second device, and send the RDMA disconnection information of the first device to the second device specifically includes: receiving an RDMA disconnection request from the second device, where the RDMA disconnection request includes the RDMA disconnection information of the second device; and sending an RDMA disconnection response to the second device, where the RDMA disconnection response includes the RDMA disconnection information of the first device.

In a possible implementation method, the processing unit 1610 is further configured to determine, based on the RDMA disconnection information of the first device, whether disconnection of the RDMA connection between the first device and the second device is allowed. That the transceiver unit 1620 is configured to send the RDMA disconnection response to the second device specifically includes: sending the RDMA disconnection response to the second device when disconnection of the RDMA connection between the first device and the second device is allowed.

In a possible implementation method, that the transceiver unit 1620 is configured to receive the RDMA disconnection information of the second device from the second device, and send the RDMA disconnection information of the first device to the second device specifically includes: sending an RDMA disconnection request to the second device, where the RDMA disconnection request includes the RDMA disconnection information of the first device; and receiving an RDMA disconnection response from the second device, where the RDMA disconnection response includes the RDMA disconnection information of the second device.

When the communication apparatus 1600 is configured to implement a function of the third device in the foregoing method embodiments, the processing unit 1610 is configured to determine to establish an RDMA connection. The transceiver unit 1620 is configured to send indication information to a fourth device, where the indication information indicates to use an RDMA scheme to perform data transmission.

In a possible implementation method, the third device is a session management network element, and the fourth device is an access network device, a user plane network element, or a mobility management network element.

In a possible implementation method, the third device is a mobility management network element, and the fourth device is an access network device, a user plane network element, or a session management network element.

In a possible implementation method, that the processing unit 1610 is configured to determine to establish the RDMA connection specifically includes: receiving, via the transceiver unit 1620, a request message from a terminal device, where the request message is for requesting to establish the RDMA connection; and determining, based on the request message, to establish the RDMA connection.

In a possible implementation method, that the processing unit 1610 is configured to determine to establish the RDMA connection specifically includes: receiving a QoS request via the transceiver unit 1620, where the QoS request includes a QoS level, and a data transmission mode corresponding to the QoS level is RDMA transmission; and determining, based on the QoS request, to establish the RDMA connection.

In a possible implementation method, that the processing unit 1610 is configured to determine to establish the RDMA connection specifically includes: determining, based on local configuration information of the third device, to establish the RDMA connection.

For more detailed descriptions of the processing unit 1610 and the transceiver unit 1620, related descriptions in the foregoing method embodiments may be directly referred to. Details are not described herein.

A communication apparatus 1700 shown in FIG. 17 includes a processor 1710 and an interface circuit 1720. The processor 1710 and the interface circuit 1720 are coupled to each other. It may be understood that the interface circuit 1720 may be a transceiver or an input/output interface. Optionally, the communication apparatus 1700 may further include a memory 1730, configured to: store instructions to be executed by the processor 1710, store input data required by the processor 1710 to run instructions, or store data generated after the processor 1710 runs instructions.

When the communication apparatus 1700 is configured to implement the foregoing method embodiments, the processor 1710 is configured to implement a function of the processing unit 1610, and the interface circuit 1720 is configured to implement a function of the transceiver unit 1620.

It may be understood that the processor in embodiments of this application may be a CPU, or may be another general-purpose processor, a digital signal processor (digital signal processor, DSP), an application-specific integrated circuit (application-specific integrated circuit, ASIC), a field-programmable gate array (field-programmable gate array, FPGA), another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, an access network device, a terminal device, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device such as a server or a data center integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

In this application, at least one means one or more, and a plurality of means two or more. A term "and/or" describes an association relationship between associated objects, and indicates that three relationships may exist. For example, A and/or B may indicate the following three cases: A exists alone, both A and B exist, and B exists alone, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first device or a module of the first device, wherein the method comprises:
receiving remote direct memory access RDMA connection establishment information of a second device from the second device, and sending RDMA connection establishment information of the first device to the second device; and
establishing an RDMA connection between the first device and the second device based on the RDMA connection establishment information of the first device and the RDMA connection establishment information of the second device.

2. The method according to claim 1, wherein receiving the RDMA connection establishment information of the second device from the second device, and sending the RDMA connection establishment information of the first device to the second device comprises:
receiving indication information, wherein the indication information indicates to use an RDMA scheme to perform data transmission;
sending an RDMA connection establishment request to the second device based on the indication information, wherein the RDMA connection establishment request comprises the RDMA connection establishment information of the first device; and
receiving an RDMA connection establishment response from the second device, wherein the RDMA connection establishment response comprises the RDMA connection establishment information of the second device.

3. The method according to claim 1 or 2, wherein receiving the RDMA connection establishment information of the second device from the second device, and sending the RDMA connection establishment information of the first device to the second device comprises:
receiving an RDMA connection establishment request from the second device, wherein the RDMA connection establishment request comprises the RDMA connection establishment information of the second device; and
sending an RDMA connection establishment response to the second device, wherein the RDMA connection establishment response comprises the RDMA connection establishment information of the first device.

4. The method according to any one of claims 1 to 3, wherein the first device is an access network device, and the second device is a user plane network element; and
receiving the RDMA connection establishment information of the second device from the second device comprises:
receiving the RDMA connection establishment information of the second device through an interface between the first device and the second device; or
receiving the RDMA connection establishment information of the second device through an interface between the first device and a mobility management network element, wherein the RDMA connection establishment information of the second device is sent by the second device to the mobility management network element via a session management network element.

5. The method according to claim 4, wherein the user plane network element is an uplink classifier user plane network element or a branching point user plane network element.

6. The method according to any one of claims 1 to 3, wherein the first device is an access network device, and the second device is a mobility management network element; and
receiving the RDMA connection establishment information of the second device from the second device comprises:
receiving the RDMA connection establishment information of the second device through an interface between the first device and the second device.

7. The method according to any one of claims 1 to 3, wherein the first device is a user plane network element, and the second device is an access network device; and
sending the RDMA connection establishment information of the first device to the second device comprises:
sending the RDMA connection establishment information of the first device through an interface between the first device and the second device; or
sending the RDMA connection establishment information of the first device through an interface between the first device and a session management network element, wherein the RDMA connection establishment information of the first device is sent by the session management network element to the second device via a mobility management network element.

8. The method according to claim 7, wherein the user plane network element is an uplink classifier user plane network element or a branching point user plane network element, and the method further comprises:
sending the RDMA connection establishment information of the first device to an anchor user plane network element, and receiving RDMA connection establishment information of the anchor user plane network element from the anchor user plane network element; and
establishing an RDMA connection between the anchor user plane network element and the first device based on the RDMA connection establishment information of the first device and the RDMA connection establishment information of the anchor user plane network element.

9. The method according to any one of claims 1 to 3, wherein the first device is a mobility management network element, and the second device is an access network device or a session management network element; and
sending the RDMA connection establishment information of the first device to the second device comprises:
sending the RDMA connection establishment information of the first device through an interface between the first device and the second device.

10. The method according to any one of claims 1 to 9, wherein receiving the RDMA connection establishment information of the second device from the second device, and sending the RDMA connection establishment information of the first device to the second device comprises:
in a session establishment or modification procedure, receiving the RDMA connection establishment information of the second device from the second device and sending the RDMA connection establishment information of the first device to the second device.

11. The method according to any one of claims 1 to 10, wherein the method further comprises:
receiving RDMA disconnection information of the second device from the second device, and sending RDMA disconnection information of the first device to the second device; and
disconnecting the RDMA connection between the first device and the second device based on the RDMA disconnection information of the first device and the RDMA disconnection information of the second device.

12. The method according to claim 11, wherein receiving the RDMA disconnection information of the second device from the second device, and sending the RDMA disconnection information of the first device to the second device comprises:
receiving an RDMA disconnection request from the second device, wherein the RDMA disconnection request comprises the RDMA disconnection information of the second device; and
sending an RDMA disconnection response to the second device, wherein the RDMA disconnection response comprises the RDMA disconnection information of the first device.

13. The method according to claim 12, wherein the method further comprises:
determining, based on the RDMA disconnection information of the first device, whether disconnection of the RDMA connection between the first device and the second device is allowed; and
sending the RDMA disconnection response to the second device comprises:
sending the RDMA disconnection response to the second device when disconnection of the RDMA connection between the first device and the second device is allowed.

14. The method according to claim 11, wherein receiving the RDMA disconnection information of the second device from the second device, and sending the RDMA disconnection information of the first device to the second device comprises:
sending an RDMA disconnection request to the second device, wherein the RDMA disconnection request comprises the RDMA disconnection information of the first device; and
receiving an RDMA disconnection response from the second device, wherein the RDMA disconnection response comprises the RDMA disconnection information of the second device.

15. A communication method, applied to a third device or a module of the third device, wherein the method comprises:
determining to establish a remote direct memory access RDMA connection; and
sending indication information to a fourth device, wherein the indication information indicates to use an RDMA scheme to perform data transmission.

16. The method according to claim 15, wherein the third device is a session management network element, and the fourth device is an access network device, a user plane network element, or a mobility management network element.

17. The method according to claim 15, wherein the third device is a mobility management network element, and the fourth device is an access network device, a user plane network element, or a session management network element.

18. The method according to any one of claims 15 to 17, wherein determining to establish the RDMA connection comprises:
receiving a request message from a terminal device, wherein the request message is for requesting to establish the RDMA connection; and
determining, based on the request message, to establish the RDMA connection.

19. The method according to any one of claims 15 to 17, wherein determining to establish the RDMA connection comprises:
receiving a quality of service QoS request, wherein the QoS request comprises a QoS level, and a data transmission mode corresponding to the QoS level is RDMA transmission; and
determining, based on the QoS request, to establish the RDMA connection.

20. The method according to any one of claims 15 to 17, wherein determining to establish the RDMA connection comprises:
determining, based on local configuration information of the third device, to establish the RDMA connection.

21. A communication apparatus, comprising a module configured to perform the method according to any one of claims 1 to 14 or the method according to any one of claims 15 to 20.

22. A communication apparatus, comprising a processor and an interface circuit, wherein the processor is configured to: communicate with another apparatus through the interface circuit, and perform the method according to any one of claims 1 to 14, or perform the method according to any one of claims 15 to 20.

23. A computer program product, wherein the computer program product comprises instructions; and when the instructions are run on a processor, the processor is enabled to perform the method according to any one of claims 1 to 14 or the method according to any one of claims 15 to 20.

24. A computer-readable storage medium, wherein the storage medium stores a computer program or instructions; and when the computer program or the instructions are executed by a communication apparatus, the method according to any one of claims 1 to 14 is implemented, or the method according to any one of claims 15 to 20 is implemented.

25. A communication system, comprising:
a first device, configured to: receive RDMA connection establishment information of a second device from the second device, and send RDMA connection establishment information of the first device to the second device; and establish an RDMA connection between the first device and the second device based on the RDMA connection establishment information of the first device and the RDMA connection establishment information of the second device; and
the second device, configured to: receive the RDMA connection establishment information of the first device from the first device, and send the RDMA connection establishment information of the second device to the first device; and establish the RDMA connection between the first device and the second device based on the RDMA connection establishment information of the first device and the RDMA connection establishment information of the second device.
